# EUROPEAN PATENT SPECIFICATION

(11) **EP 2 845 356 B1**
(45) Date of publication and mention of the grant of the patent: **30.12.2020**
(21) Application number: 13784357.9
(22) Date of filing: 30.04.2013
(51) Int. Cl.: H04L 27/26, H04L 1/06

(54) **APPARATUS AND METHOD FOR CONTROL CHANNEL BEAM MANAGEMENT IN A WIRELESS SYSTEM WITH A LARGE NUMBER OF ANTENNAS**
VORRICHTUNG UND VERFAHREN FÜR STEUERKANALSTRAHLMANAGEMENT IN EINEM DRAHTLOSEN SYSTEM MIT EINER GROSSEN ANZAHL VON ANTENNEN
APPAREIL ET PROCÉDÉ POUR LA GESTION D'UN FAISCEAU DE CANAUX DE COMMANDE DANS UN SYSTÈME SANS FIL AVEC UN GRAND NOMBRE D'ANTENNES

(30) Priority: 30.04.2012 US 201261640541 P; 19.06.2012 US 201261661659 P; 15.03.2013 US 201313837999
(43) Date of publication of application: 11.03.2015
(73) Proprietor: Samsung Electronics Co., Ltd., Suwon-si, Gyeonggi-do, 443-742 (KR)
(72) Inventor: LI, Ying, Richardson Collin County, Texas 75082 (US); PI, Zhouyue, Allen Collin County, Texas 75013 (US); JOSIAM, Kaushik, Dallas Dallas County, Texas 75206 (US); NUGGEHALLI, Pavan, Mountain View Santa Clara County, California 94043 (US)
(74) Representative: HGF
(86) International application number: PCT/KR2013/003713
(87) International publication number: WO 2013/165149

(56) References cited:
- EP-A1- 2 410 685
- EP-A1- 2 747 304
- WO-A1-2009/072193
- US-A1- 2010 075 705
- US-A1- 2010 173 639
- US-A1- 2011 085 448
- LG ELECTRONICS: "Details of Reference Signals for E-PDCCH", 3GPP DRAFT; R1-121453, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20120326 - 20120330, 20 March 2012 (2012-03-20), XP050599735, [retrieved on 2012-03-20]
- RESEARCH IN MOTION ET AL: "PDCCH Enhancement Considerations", 3GPP DRAFT; R1-111661(RIM- PDCCH ENHANCEMENT CONSIDERATION), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Barcelona, Spain; 20110509, 3 May 2011 (2011-05-03), XP050491288, [retrieved on 2011-05-03]
- TAOKA, H. ET AL.: 'MIMO and CoMP in LTE-advanced' NTT DOCOMO TECHNICAL JOURNAL vol. 12, no. 2, 30 September 2010, pages 20 - 27, XP055165281 Retrieved from the Internet: <URL:http://www.nttdocomo.co.jp/english/bin ary/pdf/corporate/technology/rd/technical-j ournal/bn/vol12_2/vol12_2_020en.pdf>
- NEC GROUP: 'Performance aspects of DL control channel enhancements for Rel-11' R1-112136, 3GPP TSG RAN WG1 MEETING #66 22 August 2011, XP050537308 Retrieved from the Internet: <URL:http://www.3gpp.org/ftp/Specs/html-inf o/TDocExMtg--R1-66--28505.htm>

## Description

### Technical Field

The present application relates generally to wireless communications and, more specifically, to a system and method for control channel beam management in millimeter wave communications,

### Background Art

It is anticipated that the next generation of mobile broadband communication systems (5G) will need to deliver 100 - 1000 times more capacity than current 4G systems, such as Long Term Evolution (LTE) and Worldwide Interoperability for Microwave Access (WiMAX), to meet the expected growth in mobile traffic. Existing approaches to increase spectral efficiency are unlikely to meet this explosive demand in wireless data. Current 4G systems use a variety of advanced techniques including Orthogonal Frequency Division Multiplexing (OFDM), Multiple Input Multiple
Output (MIMO), multi-user diversity, spatial division multiple access (SDMA), higher order modulation and advanced coding, and link adaptation to virtually eliminate the difference between theoretical limits and practical achievements. Accordingly, newer techniques like carrier aggregation, higher order MIMO, Coordinated MultiPoint (COMP) transmission, and relays are expected to provide only modest improvement in spectral efficiency. One strategy for increasing system capacity that has worked well in the past is the use of smaller cells. However, the capital and operating costs required to acquire, install, and maintain a large number of cells can be challenging since a 1000 fold increase in capacity would, in theory, entail a 1000 fold increase in the number of cells deployed. Moreover as the cell size shrinks, there is a need to perform frequent handovers that increase network signaling overhead and latency. EP 2 410 685 A1*,* EP 2 747 304 A1*,* LG Electronics: "Details of Reference Signals for E-PDCCH", 3GPP Draft; R1-121453*, Research in* Motion et al: "PDCCH Enhancement Considerations ", 3GPP Draft; R1-111661 and US 2010/075705 A1 all may provide certain related disclosures in the field of wireless communications.

### Disclosure of Invention

### Solution to Problem

A user equipment is provided. The user equipment is defined by claim 1.

A base station is provided. The base is defined by claim 4.

A method is provided. The method is defined by claim 8.

The invention is defined by the independent claims. Preferred embodiments of the invention are stipulated in the dependent claims. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention. The scope of the claims is directed to embodiment of [0129] and [0130] with the further restriction according to [0113].

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### Brief Description of Drawings

For a more complete understanding of the present disclosure and its advantages, reference is now made to the following description taken in conjunction with the accompanying drawings, in which like reference numerals represent like parts:
FIGURE 1 illustrates a wireless network according to embodiments of the present disclosure;
FIGURE 2A illustrates a high-level diagram of a wireless transmit path according to embodiments of the present disclosure;
FIGURE 2B illustrates a high-level diagram of a wireless receive path according to embodiments of the present disclosure;
FIGURE 3 illustrates a subscriber station according to embodiments of the present disclosure;
FIGURE 4 illustrates an example system architecture for beamforming according to embodiments of the present disclosure;
FIGURE 5A illustrates a transmit path for multiple input multiple output (MIMO) baseband processing and analog beam forming with a large number of antennas according to embodiments of the present disclosure;
FIGURE 5B illustrates another transmit path for MIMO baseband processing and analog beam forming with a large number of antennas according to embodiments of the present disclosure;
FIGURE 5C illustrates a receive path for MIMO baseband processing and analog beam forming with a large number of antennas, according to embodiments of the present disclosure;
FIGURE 5D illustrates another receive path for MIMO baseband processing and analog beam forming with a large number of antennas according to embodiments of the present disclosure;
FIGURE 6 illustrates a wireless communication system using antenna arrays according to embodiments of the present disclosure;
FIGURE 7 illustrates an example of different beams having different shapes for different purposes in a sector or a cell according to embodiments of the present disclosure;
FIGURE 8 illustrates an example of beamforming capabilities of a transmitter and a receiver according to embodiments of the present disclosure;
FIGURE 9 illustrates data control beam broadening according to embodiments of the present disclosure;
FIGURE 10 illustrates a process for BS changing the beam width for data control channel according to embodiments of the present disclosure;
FIGURE 11 illustrates a process for BS changing the beam width for data control channel according to embodiments of the present disclosure;
FIGURE 12 illustrates beam settings at BS and MS according to embodiments of the present disclosure;
FIGURE 13 illustrates a coordinated multi-point wireless communication system in accordance with an exemplary embodiment of the present disclosure;
FIGURE 14 illustrates another process for BS changing the beam width for data control channel according to embodiments of the present disclosure;
FIGURE 15 illustrates multiplexing of data control channel on different beams in the frequency domain according to embodiments of the present disclosure;
FIGURE 16 illustrates a frame structure for downlink (DL) according to embodiments of the present disclosure;
FIGURES 17 and 18 illustrate PSBCH channel indicating different zones of the PDCCH according to embodiments of the present disclosure;
FIGURE 19 illustrates sync channel beams according to embodiments of the present disclosure;
FIGURE 20 illustrates multiplexing of PDCCH on different beams in the time domain according to embodiments of the present disclosure;
FIGURE 21 illustrates multiplexing of PDCCH on different beams in the spatial and time domain according to embodiments of the present disclosure;
FIGURE 22 illustrates multiplexing of PDCCH on different beams in the spatial domain according to embodiments of the present disclosure;
FIGURE 23 illustrates a process for deciding uplink signaling configuration according to embodiments of the present disclosure;
FIGURE 24 illustrates a process for deciding downlink signaling configuration according to embodiments of the present disclosure;
FIGURES 25 and 26 illustrate a processes for BS MS communication with adjusting beams for data control and data communication according to embodiments of the present disclosure;
FIGURES 27 and 30 illustrate processes using downlink measurement/ reporting and the MS's beam capabilities for the BSs to decide the transmission schemes according to embodiments of the present disclosure;
FIGURE 28 illustrates a process using downlink measurement/ reporting and the BS's beam capabilities for the MSs to decide its preferred transmission schemes according to embodiments of the present disclosure;
FIGURE 29 illustrates a process using uplink measurement/ reporting and the MS's beam capabilities for the BSs to decide the transmission schemes according to embodiments of the present disclosure;
FIGURE 31 illustrates multiplexing in frequency domain for PDCCH according to embodiments of the present disclosure;
FIGURE 32 illustrates multiplexing in time domain for PDCCH according to embodiments of the present disclosure;
FIGURE 33 illustrates multiplexing in spatial domain for PDCCH according to embodiments of the present disclosure; and
FIGURE 34 illustrates multiplexing in spatial and time domains for PDCCH according to embodiments of the present disclosure.

### Best Mode for Carrying out the Invention

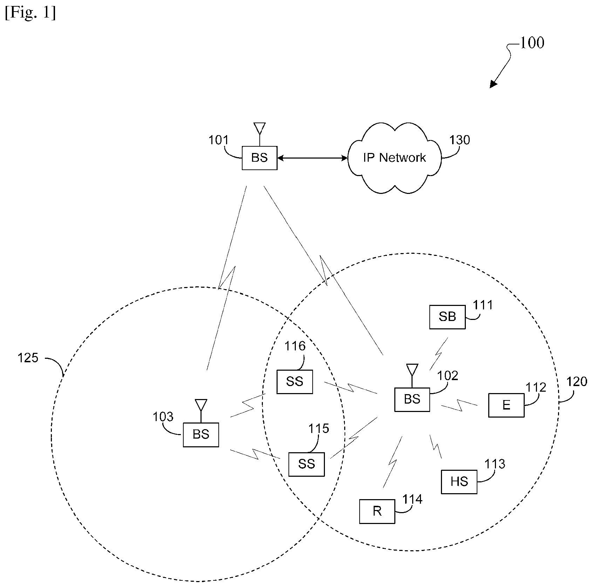

FIGURES 1 through 34, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication system.

The following documents and standards descriptions disclose a millimeter-wave broadband (MMB) system: Z. Pi and F. Khan, "An introduction to millimeter-wave mobile broadband systems," IEEE Communications Magazine, June 2011 (REF 1); and Z. Pi and F. Khan, "System design and network architecture for a millimeter-wave mobile broadband (MMB) system," in Proc. Sarnoff Symposium, 2011 (REF 2).

One proposal for next generation mobile communication (5G) is a millimeter-wave mobile broadband (MMB) system that advocates the use of large amounts of untapped spectrum in the 3-300 GHz range [1,2]. A primary obstacle to successful operation at such high frequencies is the harsh propagation environment. Millimeter wave signals do not penetrate solid matter very well and are severely absorbed by foliage and rain. Alternatively, at higher frequencies, the antennas used in base station (BS) and mobile devices can be made smaller, allowing a large number of antennas (sometimes referred to as massive MIMO) to be packed into a compact area. The availability of large number of antennas bestows the ability to achieve high gain using transmit and/or receive beamforming, which can be employed to combat propagation path loss. With a large number of antennas, it also becomes possible to spatially separate downlink and uplink transmissions between the BS and multiple mobile devices, thus reaping the power of space division multiple access to increase system capacity. For example, the wavelength of a broadband communication system at six gigahertz (GHz) is just five centimeters (cm), allowing the placement of a 64-element antenna array at the mobile station (MS) with a reasonable form-factor. Such an MS can easily form a large number of beam patterns for uplink transmission and downlink reception with different levels of directional gain. With progress in antenna technology and the use of higher frequencies, it will become feasible to form even larger number of beam patterns with higher levels of directivity.

Embodiments of the present disclosure illustrate control channel beam management in millimeter communications. Although various embodiments are disclosed in the context of communication with millimeter waves, the embodiments are certainly applicable in other communication medium, e.g., radio waves with frequency of 3GHz - 30GHz that exhibit similar properties as millimeter waves. In some cases, the embodiments of the invention are also applicable to electromagnetic waves with terahertz frequencies, infrared, visible light, and other optical media. For illustrate purpose, we will use the term "cellular band" and "millimeter wave band" where "cellular band" refers to frequencies around a few hundred megahertz to a few gigahertz and "millimeter wave band" refers to frequencies around a few tens of gigahertz to a few hundred gigahertz. The key distinction is that the radio waves in cellular bands have less propagation loss and can be better used for coverage purpose but may require large antennas. Alternatively, radio waves in millimeter wave bands suffer higher propagation loss but lend themselves well to high-gain antenna or antenna array design in a small form factor.

Millimeter waves are radio waves with wavelength in the range of 1mm - 100mm, which corresponds to radio frequency of e.g., 3GHz - 600GHz. Per definition by International Telecommunications Union (ITU), these frequencies are also referred to as the Extremely High Frequency (EHF) band. These radio waves exhibit unique propagation characteristics. For example, compared with lower frequency radio waves, they suffer higher propagation loss, have poorer ability to penetrate objects, such as buildings, walls, foliage, and are more susceptible to atmosphere absorption, deflection and diffraction due to particles (e.g., rain drops) in the air. Alternatively, due to their smaller wave lengths, more antennas can be packed in a relative small area, thus enabling high-gain antenna in small form factor. In addition, due to the aforementioned deemed disadvantages, these radio waves have been less utilized than the lower frequency radio waves. This also presents unique opportunities for new businesses to acquire the spectrum in this band at a lower cost. The ITU defines frequencies in 3GHz - 30GHz as SHF (Super High Frequency). Note that the frequencies in the SHF band also exhibit similar behavior as radio waves in the EHF band (i.e., millimeter waves), such as large propagation loss and the possibility of implementing high-gain antennas in small form factors.

Vast amount of spectrum are available in the millimeter wave band. Millimeter wave band has been used, for example, in short range (within 10 meters) communications. However, the existing technologies in millimeter wave band are not for commercial mobile communication in a wider coverage, so still there is no existing commercial cellular system in millimeter wave band. Embodiments of the present disclosure refer to mobile broadband communication systems deployed in 3 - 300 GHz frequencies as millimeter-wave mobile broadband (MMB).

One system design approach is to leverage the existing technologies for mobile communication and utilize the millimeter wave channel as additional spectrum for data communication. In this type of system, communication stations, including different types of mobile stations, base stations, and relay stations, communicate using both the cellular bands and the millimeter wave bands. The cellular bands are typically in the frequency of a few hundred megahertz to a few gigahertz. Compared with millimeter waves, the radio waves in these frequencies suffers less propagation loss, can better penetrate obstacles, and are less sensitive to non-line-of-sight (NLOS) communication link or other impairments such as absorption by oxygen, rain, and other particles in the air. Therefore, it is more advantageous to transmit certain important control channel signals via these cellular radio frequencies, while utilizing the millimeter waves for high data rate communication.

Another system design approach is to have standalone mobile communications in MMB and have control/data communications in MMB. A mobile station can handover to existing cellular system such as 4G, 3G, and so forth, in situations such as when the mobile station is in coverage hole in MMB system, or the signal strength from the base stations in MMB is not strong enough.

In future cellular system with directional antennas or antenna arrays, such as an MMB cellular system, one of the challenges is how to manage beams, especially when there are capability on beams such as some beams cannot be formed or used at the same time due to physical device constraints. Embodiments of the present disclosure solve the problems of how to manage beams in a system with directional antennas or antenna arrays.

FIGURE 1 illustrates a wireless network 100 according to one embodiment of the present disclosure. The embodiment of wireless network 100 illustrated in FIGURE 1 is for illustration only. Other embodiments of wireless network 100 could be used without departing from the scope of this disclosure.

The wireless network 100 includes a base sta eNodeB (eNB) 101, eNB 102, and eNB 103. The eNB 101 communicates with eNB 102 and eNB 103. The eNB 101 also communicates with Internet protocol (IP) network 130, such as the Internet, a proprietary IP network, or other data network.

Depending on the network type, other well-known terms may be used instead of "eNodeB," such as "base station" or "access point". For the sake of convenience, the term "eNodeB" shall be used herein to refer to the network infrastructure components that provide wireless access to remote terminals. In addition, the term "user equipment" or "UE" is used herein to designate any remote wireless equipment that wirelessly accesses an eNB and that can be used by a consumer to access services via the wireless communications network, whether the UE is a mobile device (e.g., cell phone) or is normally considered a stationary device (e.g., desktop personal computer, vending machine, etc.). Other well know terms for the remote terminals include "mobile stations" (MS) and "subscriber stations" (SS), "remote terminal" (RT), "wireless terminal" (WT), and the like.

The eNB 102 provides wireless broadband access to network 130 to a first plurality of user equipments (UEs) within coverage area 120 of eNB 102. The first plurality of UEs includes UE 111, which may be located in a small business; UE 112, which may be located in an enterprise; UE 113, which may be located in a WiFi hotspot; UE 114, which may be located in a first residence; UE 115, which may be located in a second residence; and UE 116, which may be a mobile device, such as a cell phone, a wireless laptop, a wireless PDA, or the like. UEs 111-116 may be any wireless communication device, such as, but not limited to, a mobile phone, mobile PDA and any mobile station (MS).

The eNB 103 provides wireless broadband access to a second plurality of UEs within coverage area 125 of eNB 103. The second plurality of UEs includes UE 115 and UE 116. In some embodiments, one or more of eNBs 101-103 may communicate with each other and with UEs 111-116 using 5G, LTE, LTE-A, or WiMAX techniques including techniques for: random access using multiple antennas as described in embodiments of the present disclosure.

Dotted lines show the approximate extents of coverage areas 120 and 125, which are shown as approximately circular for the purposes of illustration and explanation only. It should be clearly understood that the coverage areas associated with base stations, for example, coverage areas 120 and 125, may have other shapes, including irregular shapes, depending upon the configuration of the base stations and variations in the radio environment associated with natural and man-made obstructions.

Although FIGURE 1 depicts one example of a wireless network 100, various changes may be made to FIGURE 1. For example, another type of data network, such as a wired network, may be substituted for wireless network 100. In a wired network, network terminals may replace eNBs 101-103 and UEs 111-116. Wired connections may replace the wireless connections depicted in FIGURE 1.

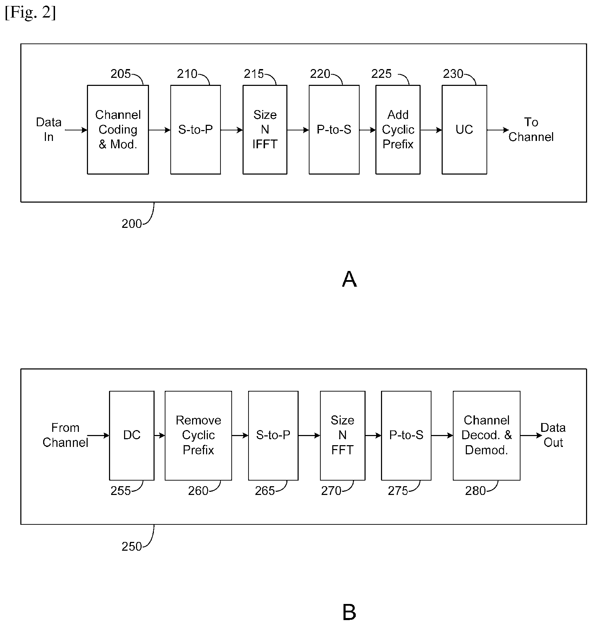

FIGURE 2A is a high-level diagram of a wireless transmit path. FIGURE 2B is a high-level diagram of a wireless receive path. In FIGURES 2A and 2B, the transmit path 200 may be implemented, e.g., in eNB 102 and the receive path 250 may be implemented, e.g., in a UE, such as UE 116 of FIGURE 1. It will be understood, however, that the receive path 250 could be implemented in an eNB (e.g. eNB 102 of FIGURE 1) and the transmit path 200 could be implemented in a UE. In certain embodiments, transmit path 200 and receive path 250 are configured to perform methods for random access using multiple antennas as described in embodiments of the present disclosure.

Transmit path 200 comprises channel coding and modulation block 205, serial-to-parallel (S-to-P) block 210, Size N Inverse Fast Fourier Transform (IFFT) block 215, parallel-to-serial (P-to-S) block 220, add cyclic prefix block 225, up-converter (UC) 230. Receive path 250 comprises down-converter (DC) 255, remove cyclic prefix block 260, serial-to-parallel (S-to-P) block 265, Size N Fast Fourier Transform (FFT) block 270, parallel-to-serial (P-to-S) block 275, channel decoding and demodulation block 280.

At least some of the components in FIGURES 2A and 2B may be implemented in software while other components may be implemented by configurable hardware (e.g., a processor) or a mixture of software and configurable hardware. In particular, it is noted that the FFT blocks and the IFFT blocks described in this disclosure document may be implemented as configurable software algorithms, where the value of Size N may be modified according to the implementation.

Furthermore, although this disclosure is directed to an embodiment that implements the Fast Fourier Transform and the Inverse Fast Fourier Transform, this is by way of illustration only and should not be construed to limit the scope of the disclosure. It will be appreciated that in an alternate embodiment of the disclosure, the Fast Fourier Transform functions and the Inverse Fast Fourier Transform functions may easily be replaced by Discrete Fourier Transform (DFT) functions and Inverse Discrete Fourier Transform (IDFT) functions, respectively. It will be appreciated that for DFT and IDFT functions, the value of the N variable may be any integer number (i.e., 1, 2, 3, 4, etc.), while for FFT and IFFT functions, the value of the N variable may be any integer number that is a power of two (i.e., 1, 2, 4, 8, 16, etc.).

In transmit path 200, channel coding and modulation block 205 receives a set of information bits, applies coding (e.g., LDPC coding) and modulates (e.g., Quadrature Phase Shift Keying (QPSK) or Quadrature Amplitude Modulation (QAM)) the input bits to produce a sequence of frequency-domain modulation symbols. Serial-to-parallel block 210 converts (i.e., de-multiplexes) the serial modulated symbols to parallel data to produce N parallel symbol streams where N is the IFFT/FFT size used in eNB 102 and UE 116. Size N IFFT block 215 then performs an IFFT operation on the N parallel symbol streams to produce time-domain output signals. Parallel-to-serial block 220 converts (i.e., multiplexes) the parallel time-domain output symbols from Size N IFFT block 215 to produce a serial time-domain signal. Add cyclic prefix block 225 then inserts a cyclic prefix to the time-domain signal. Finally, up-converter 230 modulates (i.e., up-converts) the output of add cyclic prefix block 225 to RF frequency for transmission via a wireless channel. The signal may also be filtered at baseband before conversion to RF frequency.

The transmitted RF signal arrives at UE 116 after passing through the wireless channel and reverse operations to those at eNB 102 are performed. Down-converter 255 down-converts the received signal to baseband frequency and remove cyclic prefix block 260 removes the cyclic prefix to produce the serial time-domain baseband signal. Serial-to-parallel block 265 converts the time-domain baseband signal to parallel time domain signals. Size N FFT block 270 then performs an FFT algorithm to produce N parallel frequency-domain signals. Parallel-to-serial block 275 converts the parallel frequency-domain signals to a sequence of modulated data symbols. Channel decoding and demodulation block 280 demodulates and then decodes the modulated symbols to recover the original input data stream.

Each of eNBs 101-103 may implement a transmit path that is analogous to transmitting in the downlink to UEs 111-116 and may implement a receive path that is analogous to receiving in the uplink from UEs 111-116. Similarly, each one of UEs 111-116 may implement a transmit path corresponding to the architecture for transmitting in the uplink to eNBs 101-103 and may implement a receive path corresponding to the architecture for receiving in the downlink from eNBs 101-103.

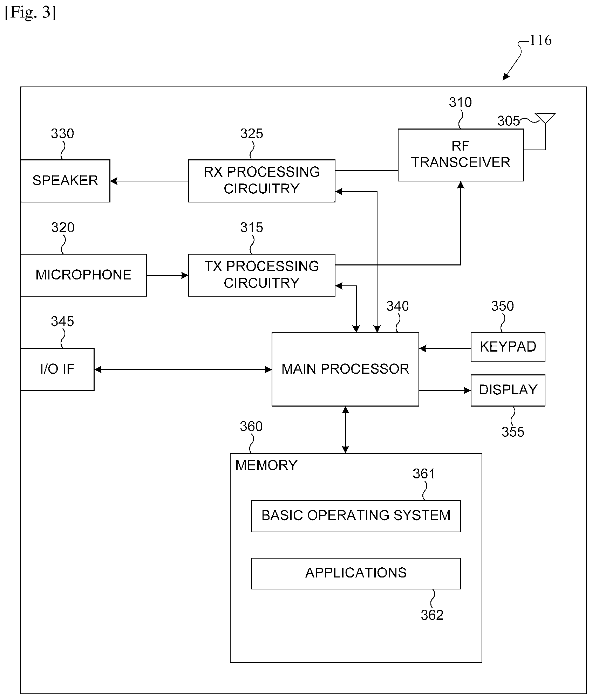

FIGURE 3 illustrates a mobile station according to embodiments of the present disclosure. The embodiment of the mobile station, such as UE 116, illustrated in FIGURE 3 is for illustration only. Other embodiments of the wireless mobile station could be used without departing from the scope of this disclosure.

UE 116 comprises antenna 305, radio frequency (RF) transceiver 310, transmit (TX) processing circuitry 315, microphone 320, and receive (RX) processing circuitry 325. Although shown as a single antenna, antenna 305 can include multiple antennas. SS 116 also comprises speaker 330, main processor 340, input/output (I/O) interface (IF) 345, keypad 350, display 355, and memory 360. Memory 360 further comprises basic operating system (OS) program 361 and a plurality of applications 362. The plurality of applications can include one or more of resource mapping tables (Tables 1-10 described in further detail herein below).

Radio frequency (RF) transceiver 310 receives from antenna 305 an incoming RF signal transmitted by a base station of wireless network 100. Radio frequency (RF) transceiver 310 down-converts the incoming RF signal to produce an intermediate frequency (IF) or a baseband signal. The IF or baseband signal is sent to receiver (RX) processing circuitry 325 that produces a processed baseband signal by filtering, decoding, and/or digitizing the baseband or IF signal. Receiver (RX) processing circuitry 325 transmits the processed baseband signal to speaker 330 (i.e., voice data) or to main processor 340 for further processing (e.g., web browsing).

Transmitter (TX) processing circuitry 315 receives analog or digital voice data from microphone 320 or other outgoing baseband data (e.g., web data, e-mail, interactive video game data) from main processor 340. Transmitter (TX) processing circuitry 315 encodes, multiplexes, and/or digitizes the outgoing baseband data to produce a processed baseband or IF signal. Radio frequency (RF) transceiver 310 receives the outgoing processed baseband or IF signal from transmitter (TX) processing circuitry 315. Radio frequency (RF) transceiver 310 up-converts the baseband or IF signal to a radio frequency (RF) signal that is transmitted via antenna 305.

In certain embodiments, main processor 340 is a microprocessor or microcontroller. Memory 360 is coupled to main processor 340. According to some embodiments of the present disclosure, part of memory 360 comprises a random access memory (RAM) and another part of memory 360 comprises a Flash memory, which acts as a read-only memory (ROM).

Main processor 340 executes basic operating system (OS) program 361 stored in memory 360 in order to control the overall operation of wireless subscriber station 116. In one such operation, main processor 340 controls the reception of forward channel signals and the transmission of reverse channel signals by radio frequency (RF) transceiver 310, receiver (RX) processing circuitry 325, and transmitter (TX) processing circuitry 315, in accordance with well-known principles.

Main processor 340 is capable of executing other processes and programs resident in memory 360, such as operations for performing random access using multiple antennas as described in embodiments of the present disclosure. Main processor 340 can move data into or out of memory 360, as required by an executing process. In some embodiments, the main processor 340 is configured to execute a plurality of applications 362, such as applications for CoMP communications and MU-MIMO communications. The main processor 340 can operate the plurality of applications 362 based on OS program 361 or in response to a signal received from BS 102. Main processor 340 is also coupled to I/O interface 345. I/O interface 345 provides subscriber station 116 with the ability to connect to other devices such as laptop computers and handheld computers. I/O interface 345 is the communication path between these accessories and main controller 340.

Main processor 340 is also coupled to keypad 350 and display unit 355. The operator of subscriber station 116 uses keypad 350 to enter data into subscriber station 116. Display 355 may be a liquid crystal display capable of rendering text and/or at least limited graphics from web sites. Alternate embodiments may use other types of displays.

Embodiments of the present disclosure provide methods and apparatus to perform random access in a system where both the BS and MSs have access to multiple antennas. For the purpose of illustration, embodiments of the present disclosure use the term beamwidth to distinguish the spatial signature of the different kind of beams that can be formed for transmission and reception. The term beamwidth should be construed to include other possible descriptions of beam patterns including, for example, codebooks (of possibly different sizes) and directional gain associated with a particular beam pattern.

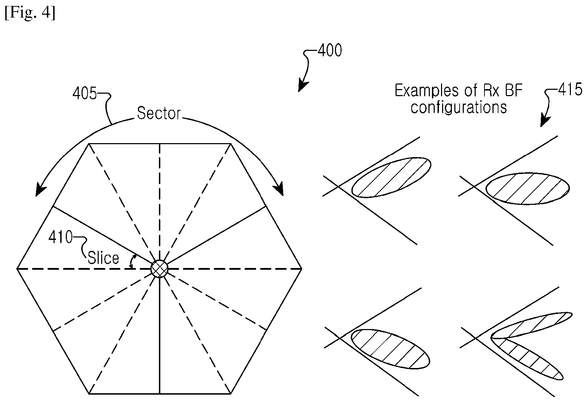

FIGURE 4 illustrates an example system architecture for beamforming according to embodiments of the present disclosure. The embodiment of the system architecture shown in FIGURE 4 is for illustration only. Other embodiments could be used without departing from the scope of this disclosure.

A BS can serve one or more cells. In the example shown in FIGURE 4, a cell 400 is divided into three sectors 405 (further denoted by the solid lines), each covering 120o in the azimuth. A sector 405 can be further subdivided into slices 410 to manage intra-sector mobility. A BS can be configured to receive random access messages on a cell 400, sector 405, or slice 410 level. A BS can employ multiple Rx beamforming configurations 415 to receive random access messages. The Rx beamforming configuration 415 can involve receiving signals in one or more directions and involve a particular selection of beamwidth. A particular Rx beamforming configuration 415 can involve one or more digital chains.

In various embodiments of the present disclosure, a BS can have one or multiple cells, and each cell can have one or multiple antenna arrays, where each array within a cell can have different frame structures, (e.g., different uplink and downlink ratios in a time division duplex (TDD) system). Multiple TX/RX (transmitting/receiving) chains can be applied in one array or in one cell. One or multiple antenna arrays in a cell can have the same downlink control channel (e.g., synchronization channel, physical broadcast channel, and the like) transmission, while the other channels (e.g., data channel) can be transmitted in the frame structure specific to each antenna array.

The base station can use one or more antennas or antenna arrays to carry out beam forming. Antenna arrays can form beams having different widths (e.g., wide beam, narrow beam, etc.). Downlink control channel information, broadcast signals and messages, and broadcast data channels and control channels can be transmitted, e.g., in wide beams. A wide beam may include a single wide beam transmitted at one time or a sweep of narrow beams at sequential times. Multicast and unicast data and control signals and messages can be transmitted, e.g., in narrow beams.

Identifiers of cells can be carried in the synchronization channel. Identifiers of arrays, beams, and the like, can be implicitly or explicitly carried in the downlink control channels (e.g., synchronization channel, physical broadcast channel, and the like). These channels can be sent over wide beams. By acquiring these channels, the mobile station (MS) can detect the identifiers.

A mobile station (MS) can also use one or more antennas or antenna arrays to carry out beam forming. As in BS antenna arrays, antenna arrays at the MS can form beams with different widths (e.g., wide beam, narrow beam, etc.). Broadcast signals and messages and broadcast data channels and control channels can be transmitted, e.g., in wide beams. Multicast and unicast data and control signals and messages can be transmitted, e.g., in narrow beams.

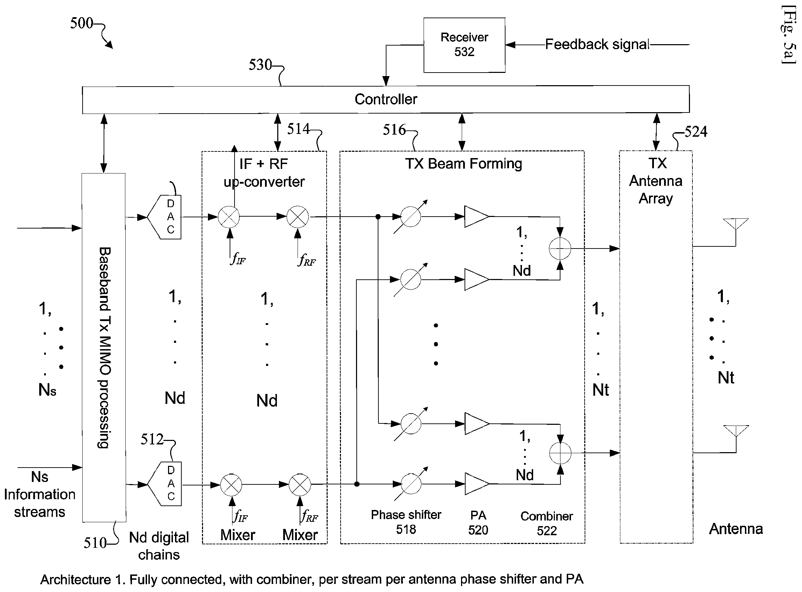

The beams can be in various shapes or can have various beam patterns. The beam shapes or the beam patterns can be regular or irregular, e.g., pencil beam shape, cone beam shape, irregular main lobe with side lobes, and the like. The beams can be formed, transmitted, received, using, e.g., the transmit paths and the receive paths in FIGURES 5A through 5D. For example, the transmit paths and the receive paths in FIGURES 5A through 5D can be located in transceivers of wireless communication devices at different points in a wireless communication (e.g., transmit paths and receive paths in one or more of the base stations 101-103 or the mobile stations 111-116 in FIGURE 1).

FIGURE 5A illustrates a transmit path for multiple input multiple output (MIMO) baseband processing and analog beam forming with a large number of antennas, according to embodiments of this disclosure. The transmit path 500 includes a beam forming architecture in which all of the signals output from baseband processing are fully connected to all the phase shifters and power amplifiers (PAs) of the antenna array.

As shown in FIGURE 5A, Ns information streams are processed by a baseband processor (not shown), and input to the baseband TX MIMO processing block 510. After the baseband TX MIMO processing, the information streams are converted at a digital and analog converter (DAC) 512 and further processed by an interim frequency (IF) and RF up-converter 514, which converts the baseband signal to the signal in RF carrier band. In some embodiments, one information stream can be split to I (in-phase) and Q (quadrature) signals for modulation. After the IF and RF up-converter 514, the signals are input to a TX beam forming module 516.

FIGURE 5A shows one possible architecture for the TX beam forming module 516, where the signals are fully connected to all the phase shifters and power amplifiers (PAs) of the transmit antennas. Each of the signals from the IF and RF up-converter 514 can go through one phase shifter 518 and one PA 520, and via a combiner 522, all the signals can be combined to contribute to one of the antennas of the TX antenna array 524. In FIGURE 5A, there are Nt transmit antennas in the TX antenna array 524. Each antenna can have one or multiple antenna elements. Each antenna transmits the signal over the air. A controller 530 can interact with the TX modules, including the baseband processor, IF and RF up-converter 514, TX beam forming module 516, and TX antenna array 524. A receiver module 532 can receive feedback signals, and the feedback signals can be input to the controller 530. The controller 530 can process the feedback signal and adjust the TX modules.

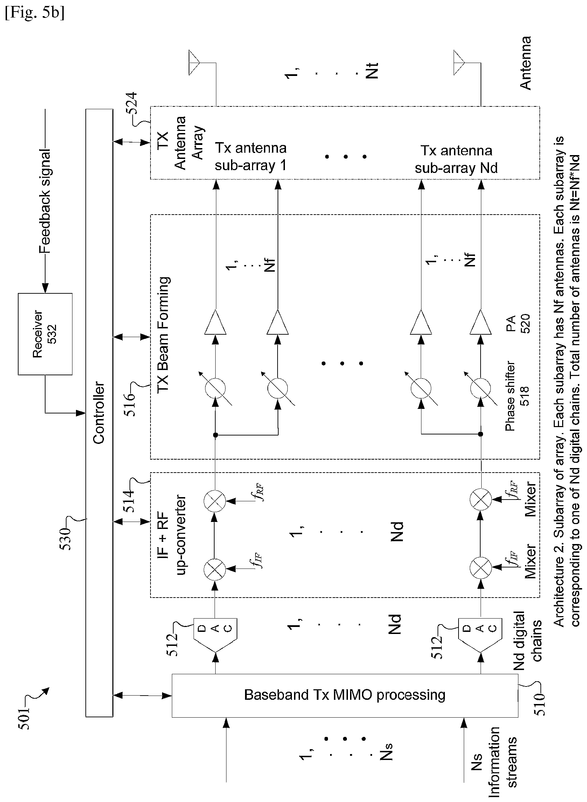

FIGURE 5B illustrates another transmit path for MIMO baseband processing and analog beam forming with a large number of antennas, according to embodiments of this disclosure. The transmit path 501 includes a beam forming architecture in which a signal output from baseband processing is connected to the phase shifters and power amplifiers (PAs) of a sub-array of the antenna array. The transmit path 501 is similar to the transmit path 500 of FIGURE 5A, except for differences in the TX beam forming module 516.

As shown in FIGURE 5B, the signal from the baseband is processed through the IF and RF up-converter 514, and is input to the phase shifters 518 and power amplifiers 520 of a sub-array of the antenna array 524, where the sub-array has Nf antennas. For the Nd signals from baseband processing (e.g., the output of the MIMO processing), if each signal goes to a sub-array with Nf antennas, the total number of transmitting antennas Nt should be Nd^{∗}Nf. The transmit path 501 includes an equal number of antennas for each sub-array. However, the disclosure is not limited thereto. Rather, the number of antennas for each sub-array need not be equal across all sub-arrays.

The transmit path 501 includes one output signal from the MIMO processing as the input to the RF processing with one sub-array of antennas. However, this disclosure is not limited thereto. Rather, one or multiple signals out of the Nd signals from baseband processing (e.g., the output of the MIMO processing) can be the inputs to one of the sub-arrays. When multiple output signals from the MIMO processing are as the inputs to one of the sub-arrays, each of the multiple output signals from the MIMO processing can be connected to part of or all of the antennas of the sub-array. For example, the RF and IF signal processing with each of the sub-array of antennas can be the same as the processing with the array of antennas as in FIGURE 5A, or any type of the RF and IF signal processing with an array of antennas. The process related to one sub-array of the antennas may be referred to as one "RF chain".

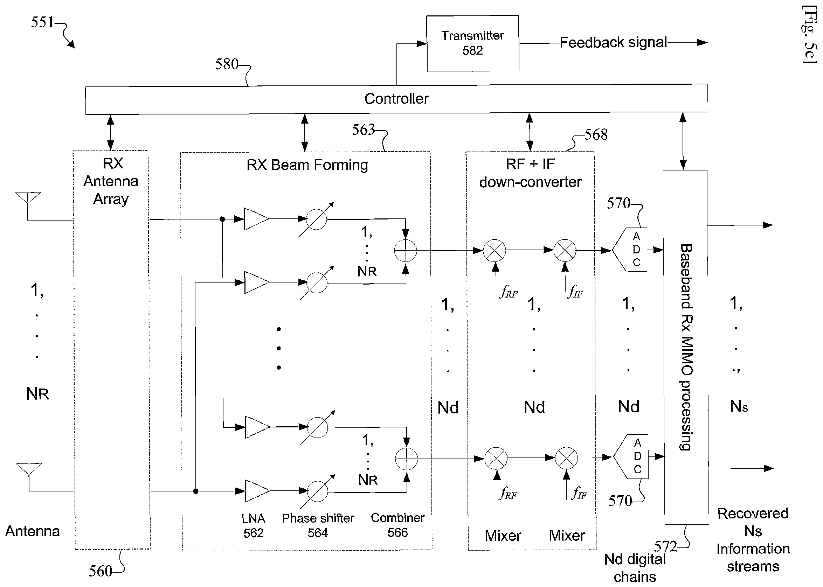

FIGURE 5C illustrates a receive path for MIMO baseband processing and analog beam forming with a large number of antennas, according to embodiments of this disclosure. The receive path 550 includes a beam forming architecture in which all of the signals received at the RX antennas are processed through an amplifier (e.g., a low noise amplifier (LNA)) and a phase shifter. The signals are then combined to form an analog stream that can be further converted to the baseband signal and processed in a baseband.

As shown in FIGURE 5C, NR receive antennas 560 receive the signals transmitted by the transmit antennas over the air. Each receive antenna can have one or multiple antenna elements. The signals from the RX antennas are processed through the LNAs 562 and the phase shifters 564. The signals are then combined at a combiner 566 to form an analog stream. In total, Nd analog streams can be formed. Each analog stream can be further converted to the baseband signal via an RF and IF down-converter 568 and an analog to digital converter (ADC) 570. The converted digital signals can be processed in a baseband RX MIMO processing module 572 and other baseband processing, to obtain the recovered NS information streams. A controller 580 can interact with the RX modules including the baseband processor, RF and IF down-converter 568, RX beam forming module 563, and RX antenna array module 560. The controller 580 can send signals to a transmitter module 582, which can send a feedback signal. The controller 580 can adjust the RX modules and determine and form the feedback signal.

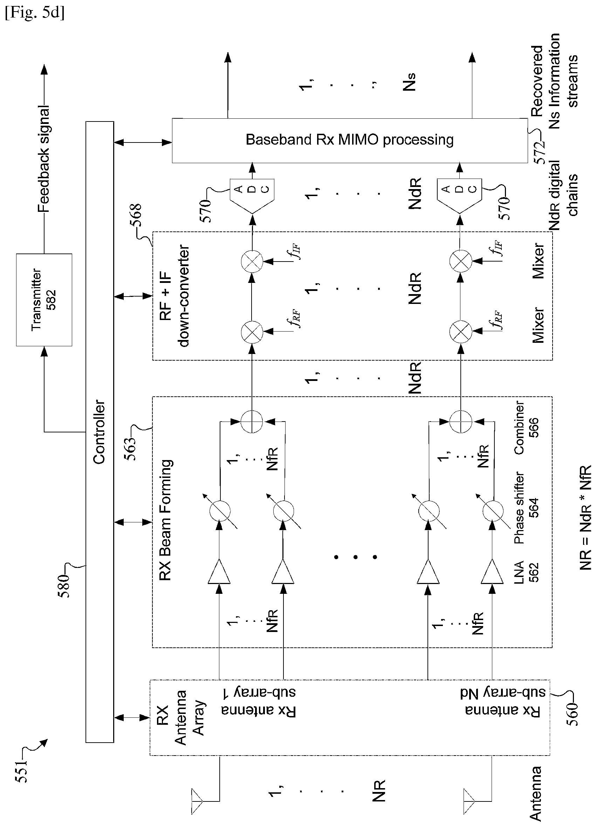

FIGURE 5D illustrates another receive path for MIMO baseband processing and analog beam forming with a large number of antennas, according to embodiments of this disclosure. The receive path 551 includes a beam forming architecture in which the signals received by a sub-array of the antenna array can be processed by amplifiers and phase shifters to form an analog stream that can be converted and processed in the baseband. The receive path 551 is similar to the receive path 550 of FIGURE 5C, except for differences in the beam forming module 563.

As shown in FIGURE 5D, the signals received by NfR antennas of a sub-array of the RX antenna array 560 are processed by the LNAs 562 and phase shifters 564, and are combined at combiners 566 to form an analog stream. There can be NdR sub-arrays (NdR = NR/NFR) with each sub-array forming one analog stream. Hence, in total, NdR analog streams can be formed. Each analog stream can be converted to the baseband signal via an RF and IF down-converter 568 and an ADC 570. The NdR digital signals are processed in the baseband module 572 to recover the Ns information streams. The receive path 551 includes an equal number of antennas for each sub-array. However, the disclosure is not limited thereto. Rather, the number of antennas for each sub-array need not be equal across all sub-arrays.

The receive path 551 includes one output signal from the RF processing with one sub-array of antennas, as one of the inputs to the baseband processing. However, this disclosure is not limited thereto. Rather, one or multiple output signals from the RF processing with one sub-array of antennas can be the inputs to the baseband processing. When multiple output signals from the RF processing with one sub-array of antennas are the inputs, each of the multiple output signals from the RF processing with one sub-array of antennas can be connected to part of or all of the antennas of the sub-array. For example, the RF and IF signal processing with each of the sub-array of antennas can be the same as the processing with the array of antennas as in FIGURE 5C, or any type of the RF and IF signal processing with an array of antennas. The process related to one sub-array of the antennas can be referred to as one "RF processing chain".

In other embodiments, there can be other transmit and receive paths which are similar to the paths in FIGURES 5A through 5D, but with different beam forming structures. For example, the power amplifier 520 can be after the combiner 522, so the number of amplifiers can be reduced.

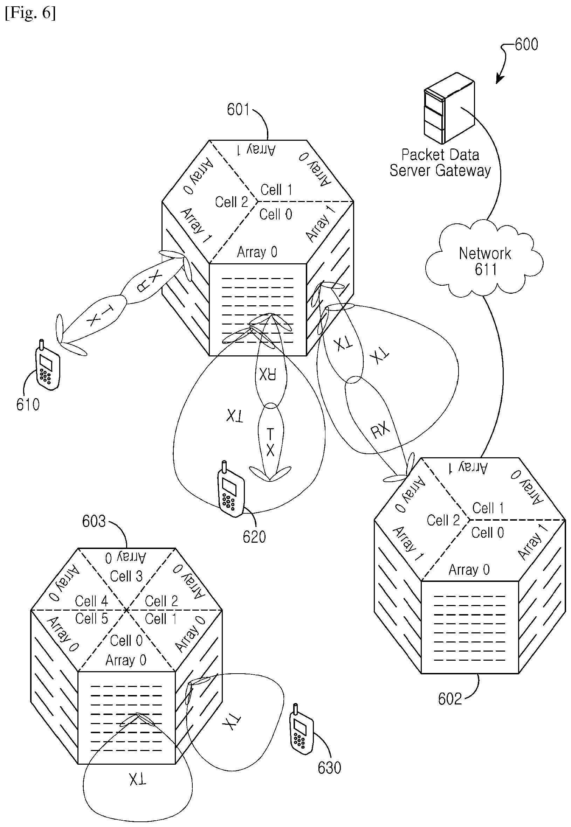

FIGURE 6 illustrates a wireless communication system using antenna arrays, according to an embodiment of this disclosure. The embodiment of wireless communication system 600 illustrated in FIGURE 6 is for illustration only. Other embodiments of the wireless communication system 600 could be used without departing from the scope of this disclosure.

As shown in FIGURE 6, system 600 includes base stations 601-603 and mobile stations 610-630. Base stations 601-603 may represent one or more of base stations 101-103 of FIGURE 1. Likewise, mobile stations 610-630 may represent one or more of mobile stations 111-116 of FIGURE 1.

BS 601 includes three cells: cell 0, cell 1, and cell 2. Each cell includes two arrays, array 0 and array 1. In cell 0 of BS 601, antenna array 0 and array 1 may transmit the same downlink control channels on a wide beam. However, array 0 can have a different frame structure from array 1. For example, array 0 can receive uplink unicast communication from MS 620, while array 1 can transmit downlink backhaul communication with cell 2 array 0 of BS 602. BS 602 includes a wired backhaul connecting to one or more backhaul networks 611. A synchronization channel (SCH) and broadcast channel (BCH) can also be transmitted over multiple beams with a beam width not as wide as the widest transmission beam from BS 601 shown in FIGURE 6. Each of these multiple beams for the SCH or BCH may have a beam width wider than beams for unicast data communication, which can be for communication between a base station and a single mobile station.

Throughout the disclosure, the transmit beams can be formed by a transmit path, such as shown in FIGURES 5A and 5B. Likewise, the receive beams can be formed by a receive path, such as shown in FIGURES 5C and 5D.

One or more of the wireless links illustrated in FIGURE 6 may be broken due to an LOS blockage (e.g., objects such as people or cars move into the LOS) or a NLOS may not have rays strong enough to maintain the communication. Even if a MS is close to a BS and the MS only moves a short distance, the link may be broken. In such an event, the MS may need to switch links if the current link cannot be recovered. A MS may need to switch links even if the MS is not at the cell edge.

If each antenna in the arrays is not positioned at a high elevation, then TX or RX beams substantially covering a sphere can be used. For example, if each beam is shaped like a pencil, then at each sampling point of a 360-degree circle of azimuth search, a 180-degree elevation search may be needed. Alternatively, if each antenna is positioned at a high elevation, then at each sampling point of a 360-degree circle of azimuth search a less than 180-degree elevation search may be sufficient.

Throughout the disclosure, a beam can be referred as a projection or propagating stream of energy radiation. Beamforming can by performed by applying adjustment of phase shifter and other factors to concentrate radiated energy in certain directions to transmit or receive signals. The concentrated radiation is called a spatial beam. By changing the phase shifts applied (e.g., at phase shifters 518 or 564), different spatial beams can be formed. The beam may have an identifier to uniquely identify the beam among other beams that can be formed. The beams can be wide beams or narrow beams. The beam can be of any shape, e.g., a pencil-like beam, a cone-like beam, a beam with an irregular shape with uneven amplitude in three dimensions, etc. The beams can be for data communications or for control channel communications. The communication can be from a BS to a MS, from the MS to the BS, from a BS to another BS, or from an MS to another MS, and the like.

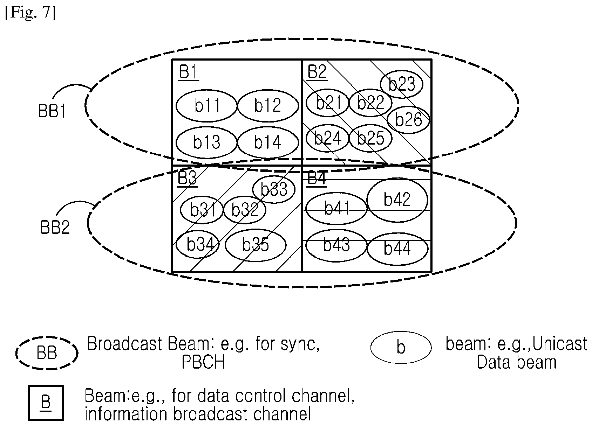

FIGURE 7 illustrates an example of different beams having different shapes and different beam widths for different purposes in a sector or a cell, according to one embodiment of this disclosure. The embodiment illustrated in FIGURE 7 is for illustration only. Other embodiments could be used without departing from the scope of this disclosure. The sector/cell shown in FIGURE 7 may represent one or more of the base station cells depicted in FIGURE 6.

FIGURE 7 shows different beams illustrated in two dimensions: in azimuth and elevation. For example, the horizontal dimension may be for angles for azimuth, and the vertical dimension may be for angles in elevation, or vice versa. The beams can be in three dimensions (e.g., like a cone), however for ease of illustration, FIGURE 7 only shows two dimensions. Throughout the disclosure, the beams (including TX beams and RX beams) can have various beam widths or various shapes, including regular or irregular shapes, not limited by those in the figures.

In a sector or a cell, one or multiple arrays with one or multiple RF chains can generate beams in different shape for different purposes. In FIGURE 7, the vertical dimension can represent elevation, and the horizontal dimension can represent azimuth. As shown in FIGURE 7, wide beams BB1, BB2 (also called broadcast beams, or "BB") may be configured for synchronization, physical broadcast channel, or a physical configuration indication channel that indicates where the physical data control channel is located, etc. The wide beams BB1, BB2 can carry the same information for the cell.

Although two wide beams BB1, BB2 are illustrated in FIGURE 7, a cell may be configured for one or multiple BBs. When there are multiple BBs in a cell, the BBs can be differentiated by implicit or explicit identifier, and the identifier can be used by the MS to monitor and report BBs. The BB beams can be swept and repeated. The repetition of the information on BB beams may depend on the MS's number of RX beams to receive the BB beam. That is, in one embodiment, the number of repetitions of the information on BB beams may be no less than the number of RX beams at the MS to receive the BB beam.

Wide control channel beams B1-B4 (collectively, "B beams") can be used for control channels. Control channel beams B1-B4 may or may not use the same beam width as wide beams BB1, BB2. Beams B1-B4 may or may not use the same reference signals as wide beams BB1, BB2 for the MS to measure and monitor. Wide beams B1-B4 are particularly useful for a broadcast or multicast to a group of MSs, as well as control information for certain MS, such as MS-specific control information, e.g., the resource allocation for a MS.

In certain embodiments, the beams used for data control channel (e.g., B beams) can be identical to the beams used for sync and BCH channel (e.g., BB beams). In certain embodiments, a 'slice' can be defined as a beam which can carry cell specific reference signal (CRS) or other reference signal which can serve the similar purpose of the CRS where one the purposes of CRS is for a UE to perform measurement and channel estimation on the beam. In certain embodiments, a 'slice' can be defined as a beam which can carry downlink data control channel (PDCCH), where the PDCCH can carry resource allocation information for one or multiple UEs which may monitor the PDCCH. In certain embodiments, a beam, or a slice, can carry beam identifier. In certain embodiments, a beam, or a slice, can have most of its energy within a certain spatial direction.

Although four control channel beams B1-B4 are illustrated in FIGURE 7, a cell may be configured for one or multiple B beams. When there are multiple B beams in a cell, the B beams can be differentiated by implicit or explicit identifier, and the identifier can be used by the MS to monitor and report the B beams. The B beams can be swept and repeated. The repetition of the information on B beams can be depending on the MS's number of RX beams to receive the B beam. That is, in one embodiment, the number of repetitions of the information on B beams may be no less than the number of RX beams at the MS to receive the B beams. A MS may or may not search for beams B1-B4 by using the information on beams BB1, BB2.

Beams b11-b44 (collectively, "b beams") may be used for data communication. A b beam may have an adaptive beam width. For some MSs (e.g., a MS with low speed), a narrower beam can be used, and for some MSs, a wider beam can be used. Reference signals can be carried by b beams. Although nineteen b beams are illustrated in FIGURE 7, a cell may be configured for one or multiple b beams. When there are multiple b beams in a cell, the b beams can be differentiated by implicit or explicit identifier, and the identifier can be used by the MS to monitor and report the b beams. The b beams can be repeated. The repetition of the information on the b beams may depend on the MS's number of RX beams to receive the b beam. That is, in one embodiment, the number of repetitions of the information on b beams may be no less than the number of RX beams at the MS to receive the b beams. A TX beam b can be locked with a RX beam after the MS monitors the beams. If the data information is sent over a locked RX beam, the repetition of the information on the b beam may not be needed.

The data control channel can be, e.g., on the B beams. In certain embodiments, a MS can be associated or attached to the data control channel which can be on one or more of the beams, e.g., the B beams. In certain embodiments, denoted as Case 1, the data control channel carried on one B beam out of the one or multiple B beams which can carry a data control channel, can include the data control information (e.g. resource allocation) of a MS whose data may be scheduled on one or multiple b beams within the same coverage of the B beam. For example, if MS1 is associated to a data control channel which is carried on beam B1, the data control channel can include the data control information of b 11 if the data for MS 1 would be scheduled on b 11, where b 11 is within the coverage of B1. The beam for data control channel, e.g., the B beam, can be formed by using, e.g., the analog or RF beam forming, while the data beams, e.g., the b beams, within the coverage of the B beam, can have the same analog or RF beam forming, e.g., by having the same phase shifter phases, or the same weight vector of the RF beam forming, as the one used for forming the B beam, and in addition, the digital beam forming or the MIMO precoding can be used to form the different b beams within the coverage of B beam.

In certain embodiments, denoted as Case 2, the data control channel carried on one B beam out of the one or multiple B beams which can carry data control channel, can include the data control information (e.g. resource allocation) of a MS whose data may be scheduled on one or multiple b beams within the same or different coverage of the B beam. For example, if MS1 is associated to a data control channel which is carried on beam B1, the data control channel can include the data control information of b 11 and b21 if the data for MS1 would be scheduled on b11 and b21, where b11 is within the coverage of B1, and b21 is within the coverage of B2; however, MS1 is attached to the data control channel on beam B1, not both B1 and B2. The beam for data control channel, e.g., the B beam, can be formed by using, e.g., the analog or RF beam forming, while the data beams, e.g., the b beams, can have the same or different analog or RF beam forming, e.g., by having the same or different phase shifter phases, or the same or different weight vector of the RF beam forming, than the one used for forming the B beam, and in addition, the digital beam forming or the MIMO precoding can be used to form the different b beams.

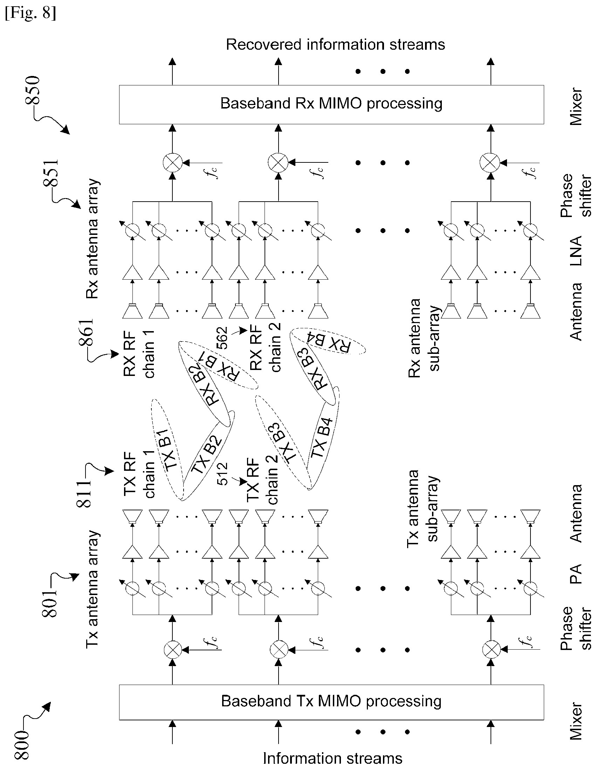

FIGURE 8 illustrates an example of beamforming capabilities of a transmitter 800 and a receiver 850 in accordance with an exemplary embodiment of the present disclosure. For example, the transmitter 800 may implement a transmit path analogous to the transmit path 200 in FIGURE 2A, the transmit path 500 in FIGURE 5A, or the transmit path 501 in FIGURE 5B. The receiver 850 may implement a receive path analogous to the receive path 550 in FIGURE 5C, receive path 551 in FIGURE 5D, or the receive path 250 in FIGURE 2B.

The RX antenna array 851 in the receiver 850 can form and steer beams. Some of the RX beams may not be used at the same time, but instead they can be used or steered at different times, e.g., sending beam 1 at a first time, then sending beam 2 at a second time right after the first time. These beamforming constraints may be due to capability limitations of the receiver 850. For example, there could be multiple RF processing chains, antenna sub-arrays, or panels facing different directions, such that in certain cases certain beams with certain directions can only be formed by one of the antenna sub-arrays, not from all the sub-arrays. In another example, one RF processing chain or antenna sub-array may only be capable of steering or forming one beam at a time. Thus, for simultaneous beamforming, the receiver 850 may need to use different RF processing chains or antenna sub-arrays for each RX beam needing to be formed si-multaneously.

The RF beamforming capability on the beams includes which beams can be formed or used at the same time, etc., can be fed back to the transmitter 800. The transmitter 800 (or some scheduling controller or coordinator) uses one or multiple receivers beamforming capabilities including which beams can be formed or used at the same time as one of the factors to determine which transmitting (TX) beams should be used.

The transmitter 800 and the receiver 850 include multiple RF processing chains. One of the RF chains may include one or more antenna sub-arrays, which could be a subset of the entire antenna array.

As illustrated in FIGURE 8, RF chain 1 861 at the receiver 850 is capable of forming two RX beams, RX B1 and RX B2. In this example, RX B1 and RX B2 cannot be formed at the same time, because the antennas are part of the same RF chain 1 861. Rather, RX B1 and RX B2 can be used or steered at different times. RF chain 2 862 at the receiver 800 also has two RX beams, RX B3 and RX B4. Similarly, RX B3 and RX B4 cannot be formed at the same time; rather, RX B3 and RX B4 can be used or steered at different times. For the transmitter 800, RF chain 1 811 is capable of forming TX B1 and TX B2; however, TX B1 and TX B2 cannot be formed at the same time but can be steered at different times. Similarly, RF chain 2 812 is capable of forming TX B3 and TX B4; however, TX B3 and TX B4 cannot be formed at the same time but can be steered at different times.

In this illustrative example, by steering beams at the RX and TX sides, the receiver 850 identifies three possible links (or pairs of the TX and RX beams) that can be formed with the transmitter 800, i.e., (TX B2, RX B2), (TX B3, RX B1), and (TX B4, RX B3). Among the three pairs, (TX B2, RX B2) and (TX B3, RX B1) cannot be received by the receiver 850 at the same time because RX B1 and RX B2 cannot be formed at the same time. If the information streams (e.g., the input to the transmitter 800) are the same single stream, i.e., single stream communication, then each of the TX beams are transmitting the same information, and there may not be the need for the transmitter 801 to know the beamforming capability of the receiver 850, such as which RX beams cannot be formed at the same time. The transmitter 801 may choose the best TX and RX pairs simply from measurement report from the receiver 850.

If the information streams are different streams, i.e., multi-stream communication, some of the RF chains may transmit different information than other RF chains. For example, the RF chain 811 may transmit a first stream, and the RF chain 812 may transmit a second stream. In this example, the transmitter 800 may need to know the beamforming capabilities of the receiver 850, such as which RX beams cannot be formed at the same time. Since the receiver 850 cannot receive the pairs of (TX B2, RX B2) and (TX B3, RX B1) at the same time because RX B1 and RX B2 cannot be formed at the same time, the transmitter 800 may advantageously choose to use TX B2 to transmit stream 1 and TX B4 to stream 2. In this configuration, the receiver 850 can receive stream 1 on RX B2 using RF chain 861 while receiving stream 2 on RX B3 using RF chain 862. As a result, the transmitter 800 is informed of the beamforming constraints of the receiver 850, and the receiver 850 is able properly receive and process multiple streams of information simultaneously.

In certain embodiments, the B beams may also include the information of b beams in the other B beams coverage. For example, the data control beam B1 can include information about the data beams b21 if BS 102 decides that the data beam b21 will be used for the data communication. UE 116 receives beam B1, and it decode B1 and find that b21 is scheduled to be for the data communication.

In certain embodiments, one RF chain can be for one or multiple antenna subarrays. One antenna subarray can form one or multiple beams. The digital beamforming can be carried out on the baseband MIMO processing. The analog beam forming can be carried out by adjusting the phase shifter, the power amplifier (PA), the LNA. The wide beams BB, B, can be formed by the analog beamforming, or both the analog and digital beamforming. The narrow beams can be formed by both the analog and digital beamforming.

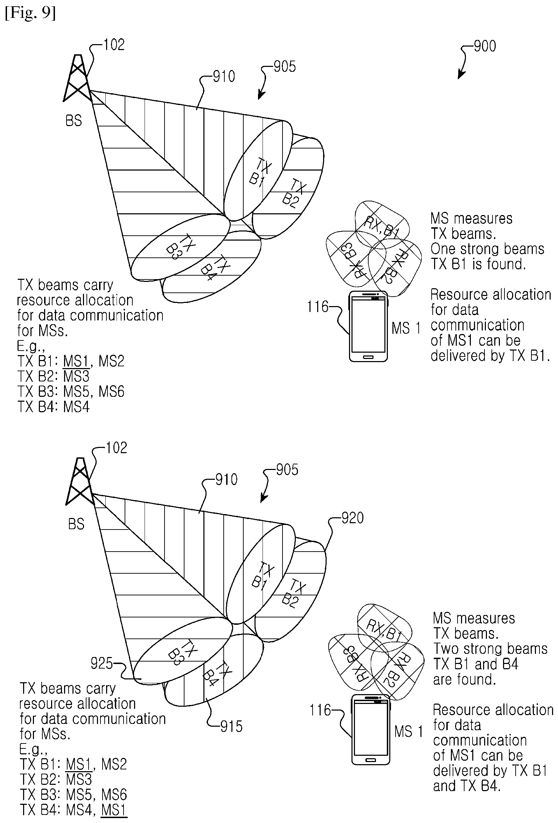

FIGURE 9 illustrates data control beam broadening according to embodiments of the present disclosure. The embodiment of the data control beam broadening 900 shown in FIGURE 9 is for illustration only. Other embodiments could be used without departing from the scope of this disclosure.

When certain conditions are met, the data control beam or beams 905 for UE 116 can be adjusted, such as broadened or narrowed, or switched. One way to broaden the beamwidth of data control beam(s) 905 is to use more beams. One way to narrow the beamwidth of data control beam(s) 905 is to use less beams. BS 102 can include the information such as resource allocation for data communication in one or multiple TX beams. Each of the data control beam 905 can carry information such as resource allocations for data communication for different MSs, hence the information content on each data control beam may be different. UE 116 can try to decode the multiple beams 905, to know the information such as the resource allocation.

The trigger conditions can be, for example, mobility of UE 116. If the mobility of UE 116 is higher than a certain threshold, BS 102 can use broadened beam, e.g., multiple beams, to send the information to UE 116.

In the example shown in FIGURE 9, UE 116 measures TX beams 905 of BS 102. One strong beam TX B1 910 is found. UE 116 can then let BS 102 know that TX B1 910 is strong. BS 102 then can send information, such as the resource allocation for data communication of UE 116 over BS TX B1 beam 910. When certain conditions are met, such as if UE 116 increases its mobility, UE 116 can find two strong BS TX beams, e.g., TX B1 910 and TX B4 915. UE 116 can report the detection of the two strong beams to BS 102. Then BS 102 sends information, such as the resource allocation for data communication of UE 116 over BS TX B1 910 and BS TX B4 915.

BS 102 has four TX beams 905, and each beam 905 can carry resource allocation for data communication for MSs. In the example, TX B1 905 contains information of resource allocation for UE 115 and UE 116. TX B2 920 contains information for MS3. TX B3 925 contains information for MS5, MS6. TX B4 915 contains information for MS4. Which TX Beam contains information for which MSs can be determined by the MS's measurement, moving speed, and the like.

When certain conditions are met, e.g., when UE 116 finds two strong beams, e.g., TX B1 910 and TX B4 915, UE 116 reports back to BS 102, and BS 102 can decide that TX B4 915 can include the information for UE 116. Hence the information for UE 116 can be in both TX B1 910 and TX B4 915.

In the example, if UE 116 finds TXB2 920 and TX B3 925 stronger, then BS 102 switches the data control beam for UE 116 to BS TX B2 920 and TX B3 925. The data control beam for UE 116 is not only broadened, but also switched to the new TX beams. The data control beam also can be narrowed, e.g., from BS TX B1 910 and TX B4 915, to only using BS TX B4 915.

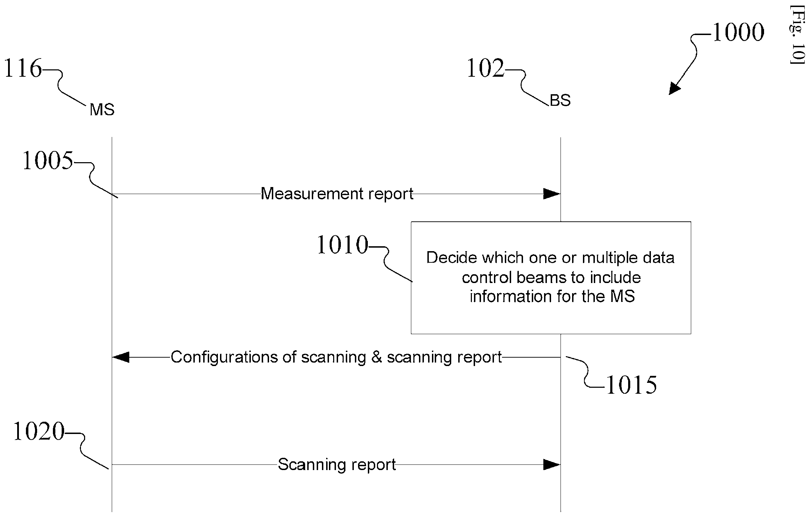

FIGURE 10 illustrates a process for BS changing the beam width for data control channel according to embodiments of the present disclosure. The embodiment of the process 1000 shown in FIGURE 10 is for illustration only. Other embodiments could be used without departing from the scope of this disclosure.

In certain embodiments, the data control beam can carry the reference signals. UE 116 can send the measurement report 1005 to BS 102 after it measures the reference signals. BS 102 can then decide 1010 on how to deliver the data control beams to UE 116, such as whether to include more beams in the set of the data control beams, or remove beams from the set of the data control beams. BS 102 can make decision based on e.g., the MS measurement report, mobile station's mobility such as moving speed, and the like. BS 102 transmits a message 1015 with configurations of scanning and scanning report to UE 116. In response, UE 116 sends a scanning report 1020 to BS 102.

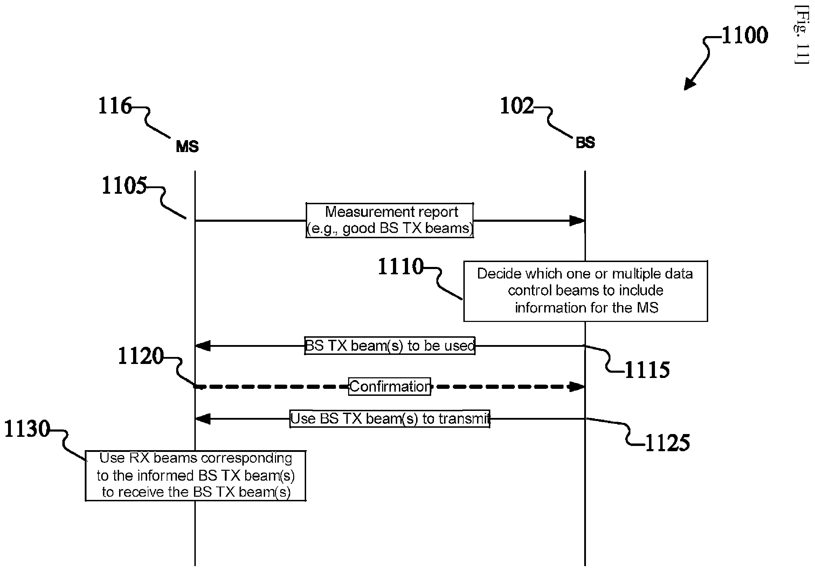

FIGURE 11 illustrates a process for BS changing the beam width for data control channel according to embodiments of the present disclosure.

According to the embodiments, if BS 102 steers its TX beams, the MS (i.e., UE 116) measure the pairs of BS TX beams and MS RX beams. UE 116 sends a measurement report 1105 to BS 102 about the data control beams. The measurement report 1105 can include information such as the good or preferred BS TX data control beams, the measurement result (such as signal strength, SINR, SIR, SNR, and the like), and so forth. Then, BS 102 decide 1110 which multiple data control beams to include the resource allocation information, for UE 116. BS 102 sends UE 116 a message 1115 about its decision on the BS TX beams to be used. UE 116 can send confirmation 1120 regarding the message 1115. BS 102 sends 1125 the data control beams using the decided beams to transmit. UE 116 uses 1130 RX beams that are good ones (e.g., good signal quality based on measurement) corresponding to the informed BS TX beams to receive the BS TX beams.

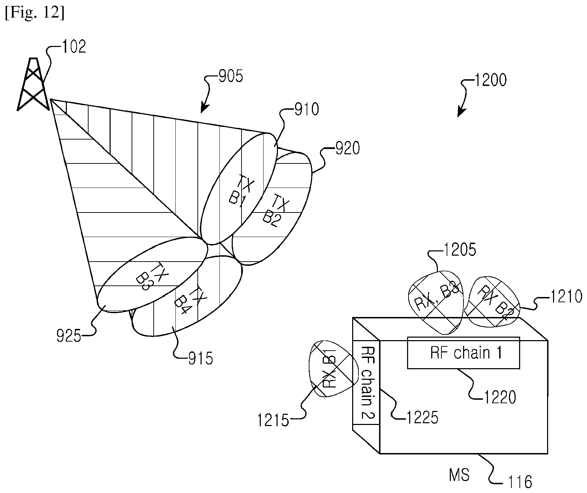

FIGURE 12 illustrates beam settings at BS and MS according to embodiments of the present disclosure. The embodiment of the beam setting 1200 shown in FIGURE 12 is for illustration only. Other embodiments could be used without departing from the scope of this disclosure.

In the example shown in FIGURE 12, BS 102 has four TX beams 905. UE 116 has three RX beams, which can be from the same or different RF chains. In the example, BS 102 forms the TX B1 910, TX B2 920, TX B3 925, TX B4 915 by steering, i.e., these beams are not concurrent in the time domain. When UE 116 finds the good BS TX and MS RX pairs, such as (TX B1 910, RX B3 1205), (TX B1 910, RX B2 1210), (TX B4 915, RX B1 1215). RX B3 1205 and RX B2 1210 can be formed by RF chain 1 1220 while RX B1 1215 is formed by RF chain 2 1225. UE 116 tells BS 102 that TX B1 910 and TX B2 920 are good TX beams, then BS 102 decides to transmit the data control information for UE 116 in both TX B1 910 and TX B4 915. UE 116 then uses RX B2 1210 or RX B3 1205 to receive TX B1 910, and uses RX B1 1215 to receive TX B4 915, and receives these two TX beams, TX B1 910, TX B4 915, at different times. In this case, both RF chains can be used. If RX B1 1215 beam can also be formed by RF chain 1 1220, then UE 116 can use RF chain 1 1220, use RX B2 1210 or RX B3 1205 to receive TX B1 910, and use RX B1 1215 to receive TX B4 915, and receive these two TX beams, TX B1 910, TX B4 915, at different times, both at RF chain 1 1220.

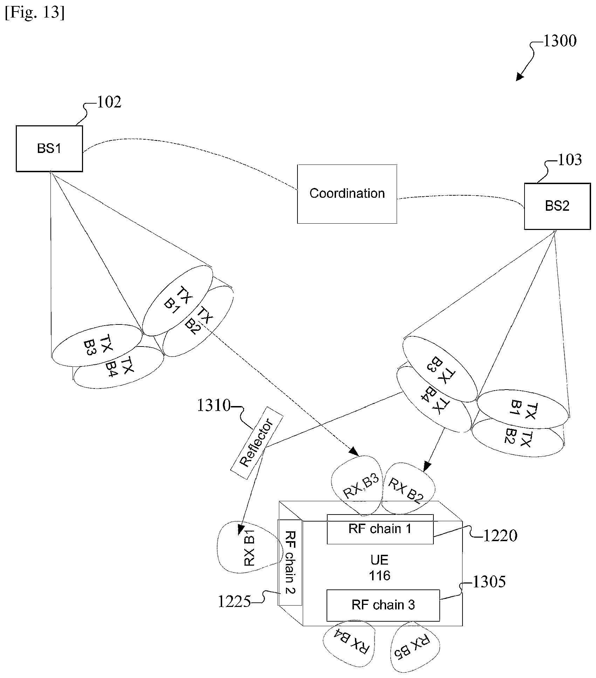

FIGURE 13 illustrates a coordinated multi-point wireless communication system in accordance with an exemplary embodiment of the present disclosure. The embodiment of the coordinated multipoint system 1300 shown in FIGURE 13 is for illustration only. Other embodiments could be used without departing from the present disclosure. In this illustrative embodiment, the UE 116 can concurrently connect to multiple base stations 102 and 103, for example, according to CoMP communication principals. In certain embodiments, the UE 116 can concurrently connect to multiple RF chains, or antennas from the same base station, such as BS 102.

In this illustrative embodiment, the position of the UE 116 relative to and the BSs 102 and 103 can affect the RF beamforming capabilities of UE 116 and/or the BSs 102 and 103. For example, the position of the antenna sub-arrays or panels within UE 116 can be facing different directions depending on the way UE 116 is manufactured and/ or the manner in which UE 116 is positioned or held. In this illustrative example, UE 116 has three different RF processing chains 1220, 1225, and 1305 that are located on different panels of UE 116. Based on the conditions in the system 1300 (e.g., channel conditions, presence of reflectors (e.g., reflector 1310), etc.) and the positioning of UE 116 relative to the BSs 102 and 103 in three dimensional space, certain beamforming constraints may be present. For example, as illustrated, UE 116 cannot form RX B2 and RX B3 concurrently due to the limitation of the RF processing chain1 1220, but RX beams at different RF chains (e.g., RX B1 and RX B3 or RX B1 and RX B2) may be formed concurrently. In this example, for concurrent communication between UE 116 and BSs 102 and 103, (BS1 TX B1, MS RX B3) and (BS2 TX B4, MS RX B1) may be used. For non-concurrent communication, (BS1 TX B1, MS RX B3), (BS2 TX B4, MS RX B2) may be used for UE 116 to use one RF processing chain 1220 and (BS1 TX B1, MS RX B3) and (BS2 TX B4, MS RX B1) may be used for UE 116 to use two RF processing chains 1220 and 1225. In various embodiments, UE 116 and/or the BSs 102 and 103 identify these constraints on concurrent beamforming and use these constraints in determining the appropriate transmission scheme to use. For non-concurrent communication from BS 102 and BS 103 to UE 116, BS 102 and BS 103 can send the same or different information to UE 116S, but UE 116 may not be able to do joint decoding even if the same information is sent from the two base stations. For concurrent communication from BS 102 and BS 103 to UE 116, the two base stations can send the same or different information to UE 116. For the same information from BS 102 and BS 103, UE 116 is able to combine.

While FIGURE 13 illustrates embodiments where UE 116 communicates with multiple BSs 102 and 103, these embodiments can also be implemented in any node of another network entity, e.g., a BS communicating with multiple BSs 102 and 103. These embodiments may also be implemented where a BS or MS communicates with multiple mobile stations or multiple base station systems.

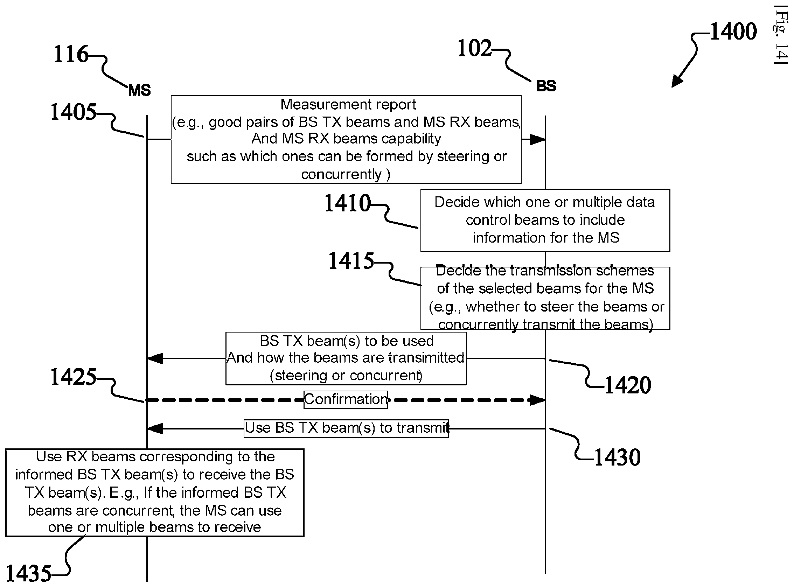

FIGURE 14 illustrates another process for BS changing the beam width for data control channel according to embodiments of the present disclosure. The embodiment of the process 1400 shown in FIGURE 14 is for illustration only. Other embodiments could be used without departing from the scope of this disclosure.

In certain embodiments, if BS 102 has the capability to send concurrent TX beams (e.g., BS 102 has multiple RF chains), BS 102 configures how UE 116 should perform the measurement and report the measurement, based on its capability of concurrent TX beams. BS 102 also can configure how UE 116 should perform the measurement and report the measurement based on the capability of MS's RX beams, if known by BS 102.

The measurement report 1405 from UE 116, can be configured to include information, such as, good pairs of BS TX beams and MS RX beams, and MS RX beams capability such as which RX beams can be formed by steering or concurrently, and so forth. The report 1405 alternatively can include the sets of the beam pairs that UE 116 can receive where in each set the beam pairs can be received concurrently, and so forth.

Based on the report, BS 102 decides 1410 which one or multiple data control beams to include the information (e.g., the resource allocation information) for UE 116. BS 102 can decides 1415 the transmission schemes of the selected beams for UE 116, e.g., whether to steer the beams or concurrently transmit the information over multiple beams.

BS 102 sends UE 116 the information 1420, which includes its TX beams to be used. The information 1420 also can include how the BS TX beams are transmitted, e.g., by steering, or the beams being concurrently transmitted.

Alternatively, BS 1102 can inform UE 116, via the information 1420, which MS RX beams to use, if BS 102 has the knowledge about the MS's RX beams corresponding to the BS TX beams. Such knowledge can be obtained from UE 116's report 1405 on the good pairs of BS TX beams and MS RX beams.

UE 116 sends the confirmation 1425 to BS 102. In certain embodiments, the confirmation is omitted.

BS 102 uses 1430 the selected TX beam(s) to transmit the information to UE 116. The information includes the resource allocation for UE 116.

UE 116 then uses 1435 RX beams corresponding to the informed BS TX beam(s) to receive the BS TX beam(s). For example, if the informed BS TX beams are concurrent, UE 116 can use one or multiple beams to receive the TX beams.

In certain embodiments, if BS 102 tells UE 116 about which RX beams to use and how to receive (e.g., steering or concurrently using RX beams) in previous step, UE 116 follows the instruction of BS 102.

The following procedure describes some examples. The example setting is as in FIGURE 12, BS 102 has four TX beams. UE 116 has three RX beams, which can be from the same or different RF chains.

If BS TX B1 and BS TX B4 are formed concurrently (in the time domain) where they may have some separation in the frequency domain, and TX B1 and TX B4 carry different information, then UE 116 can use either RX B2 or B3 on RF chain 1 1220 and RX B1 on RF chain 2 1225, to concurrently receive the concurrent BS TX B1 and BS TX B4, and decode the information on BS TX B1 and the information on BS TX B4.

If UE 116 determines that the good BS TX and MS RX pairs, (TX B1, RX B3), (TX B4, RX B2), and assumes the RX B2 and RX B3 cannot be formed at the same time on RF chain 1 1220, and RF chain 2 1225 cannot form beam B2 or B3, such as due to a directional limitation, orientation, or the like. Then UE 116 can only use RX B2 or RX B3, and UE 116 informs BS 102 that either TX B1 or TX B4 can be used. Then, BS 102 informs UE 116 which TX beam it will use, e.g., BS 102 informs UE 116 that BS 102 will use TX B1, then UE 116 will use RX B3 to receive the beam TX B1.

If UE 116 only informs BS 102 that TX B1 can be used, then, BS 102 can skip sending UE 116 about its decision. UE 116 will by default be using the receive beam B3, to receive it because RX B3 is good to receive TX B1.

In certain embodiments, if the beams are generated by steering, and if UE 116 uses RX beam forming also by steering, transmitting schemes can be related to the MS's capability on the RX beams.

For example, if UE 116 only has one chain to receive, also the TX has one chain to steer the TX beam, then to achieve multiple TX beams to be received by UE 116, these TX beams should not be concurrently sent to UE 116 if they are not multiplexed in the frequency domain, because UE 116 cannot form the beam to receive it concurrently.

If UE 116 can have multiple chains to receive, the concurrent TX beams transmission to the same MS can be achieved, if the TX side has multiple chains to generate the concurrent TX beams.

In certain embodiments, the control beams can be multiplexed in the time domain, or frequency domain, or in the spatial domain, or a mixture of these three domains. When the beams are multiplexed in the spatial domain, the beams can share the same time and frequency. Alternatively, the beams can be multiplexed in a joint spatial domain and frequency domain, while they share the same time. Alternatively the beams can be multiplexed in a joint spatial domain and time domain, while they share the same frequency.

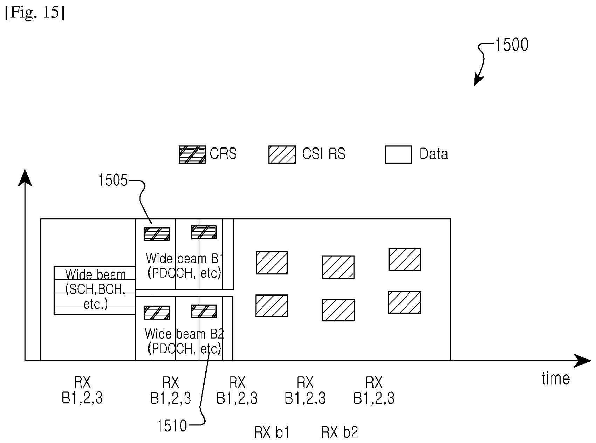

FIGURE 15 illustrates multiplexing of data control channel (e.g., PDCCH, physical downlink control channel) on different beams in the frequency domain according to embodiments of the present disclosure. The embodiment of the multiplexing of data control channel 1500 shown in FIGURE 15 is for illustration only. Other embodiments could be used without departing from the scope of this disclosure.

In the example, if each of B1 1505 and B2 1510 includes the information (e.g., the resource allocation information) for MS1 (e.g. UE 116), the information is not on the exact same resource block of time and frequency, hence MS1 should decode B1 1505 and B2 1510 separately. Note that throughout the disclosure, the wide beam, e.g., the beam for PDCCH, can carry CRS (cell specific reference signal), by which the UE or MS can perform the measurement of the beams. The CSI RS (channel state information reference signal) can be transmitted in the beams for data communication, where CSI RS can be used for the UE or MS to perform channel measurement and estimation for the data communication. BS 102 can tell MS1 that each B1 1505 and B2 1510 contains the information that MS1 needs and then MS1 can use proper RX beams to receive it. If the information such as the resource allocation for a certain MS (e.g., MS2) is included in only one of the beams, e.g., in B1 1505, then the MS only needs to decode beam B1 1505. BS 102 can tell MS2 (e.g., UE 115) that B2 1510 contains the information that MS2 needs and then MS2 can use proper RX beams to receive it, such as RX beam B1, B2, B3, or narrower RX beam b2, b2, b3, and the like.

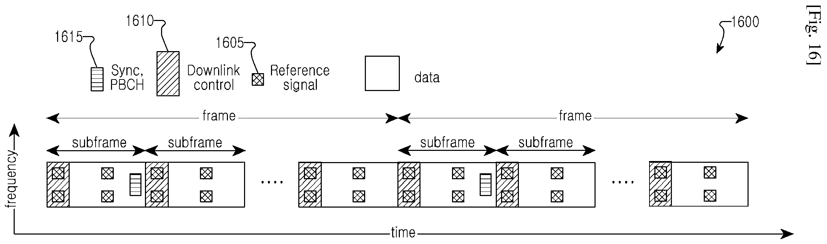

FIGURE 16 illustrates a frame structure for downlink (DL) according to embodiments of the present disclosure. The embodiment of the frame 1600 shown in FIGURE 16 is for illustration only. Other embodiments could be used without departing from the scope of this disclosure. For TDD systems (time division duplex), the UL portion may occur in the same interval (e.g., same DL subframe or DL frame).

In certain embodiments, BS 102 has common reference signals or cell specific reference signals (CRS) 1605 for DL beams or beam patterns. The CRS 1605 can be used by UE 116 to measure the signal strength (e.g., the reference signal received power, the reference signal received quality, signal to interference ratio, signal to interference and noise ratio, signal to noise ratio, and the like) of each different DL beams or beam patterns. The CRS 1605 can be carried on the beams for DL control 1610, such as the physical DL control channel (PDCCH). The CRS 1605 can also be carried in resources different from the DL control channel 1610. Note that in certain embodiments, CSI RS (channel state information reference signal) can serve as the reference signal, while the CRS may not be used. In certain embodiments, CRS may have other names.

In certain embodiments, the CRS 1605 also is used for the channel estimation, to decode the information on the beams that include the CRS 1605. For example, the physical broadcast channel (PBCH) 1615 and the CRS 1605 can be included on the same beams or beam patterns (the CRS 1605 can be sent at the same time or a different time as PBCH 1615), and the PBCH 1615 can be decoded by estimating the channel via CRS 1605. For example, PBCH 1615 on the first beam or beam pattern can be decoded by estimating the channel via CRS 1605 on the first beam or beam pattern.

BS 102 sends DL synchronization channel (Sync). The sync channel can be steered at one or multiple DL beams. Each DL beam can carry its beam identifier. The sync channel can carry DL preambles, or the cell identifier. The DL beams can be steered for one round, then repeated for another round, until a certain number of rounds are achieved, for the support of UE's with multiple RX beams. As an alternative, the DL beams can repeat the information it delivers first at one beam, then steer to a second beam and repeat the information, then move on to another beam until all the beams for DL sync have transmitted. UE 116 monitors and decode the DL sync channel when needed, such as when UE 116 performs initial network entry or network re-entry, or monitoring neighboring cells, coming back to the system after sleeping in idle mode, coming back from the link failure. Once UE 116 decodes DL sync, UE 116 knows the DL beam identifiers, DL timing, for frames and subframes, and the like, and cell identifier of BS 102. Until now, UE 116 can know when and where to get the cell specific reference signal (CRS) 1605. The DL reference signal (e.g., the CRS) can be using sequence, such as the cell ID, or cell ID and the DL beam identifier together. UE 116 measures or estimates the channel using CRS 1605.

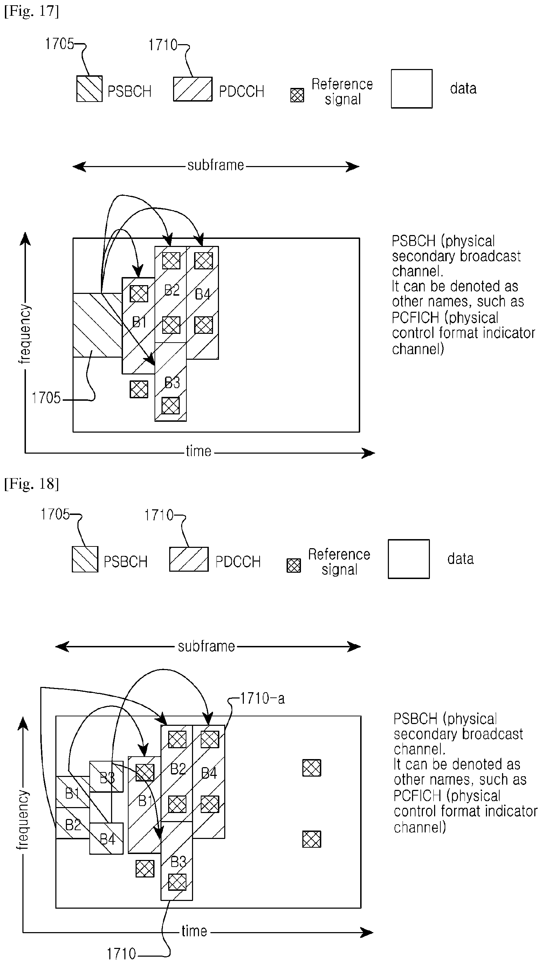

FIGURE 17 illustrates a common PSBCH channel indicating different zones of the PDCCH according to embodiments of the present disclosure. FIGURE 18 illustrates a separate PSBCH region indicating a different PDCCH zone according to embodiments of the present disclosure. The embodiments of the common PSBCH channel shown in FIGURE 17 and the separate PSBCH region shown in FIGURE 18 are for illustration only. Other embodiments could be used without departing from the scope of this disclosure. In the examples shown in the present disclosure, the terms 'frame, 'subframe', superframe, or slot may be used interchangeably to indicate a short duration of time.

A physical secondary broadcast channel (PSBCH) 1705 can be used to indicate the PDCCH 1710 resource location. The PSBCH 1705 indicates whether the PDCCH 1710 for each beam is scheduled or exists in the current subframe, and if it exists, a location for the resource allocation, or the zone for the PDCCH 1710 of the beam.

When UE 116 decodes the PSBCH 1705, UE 116 can determine whether the PDCCH 1710 for each beam exists in the current subframe. Not all of the PDCCH 1710 may exist in the same subframe. If the PDCCH 1710, e.g., for the unicast data to certain UEs, is not scheduled in the current subframe, the PSBCH 1705 indicates that the PDCCH 1710 for that beam does not exist in the current subframe, hence UE 116 does not need to proceed to go to decode the PDCCH 1710 if UE 116 has a current association to the PDCCH 1710 on the beam. Otherwise, if UE 116 finds that the PDCCH 1710 that UE 116 currently associates is scheduled in the current subframe, UE 116 further goes to the PDCCH 1710 to decode it to find out whether its data is scheduled.

In certain embodiments, UE 116 can be associated with one or multiple of the PDCCHs 1710 on one or multiple of the beams. When UE 116 is associated with a PDCCH 1710 beam, the PDCCH 1710 can carry the information for the UE's data resource allocation and so forth, or the PDCCH 1710 can carry the information for the UE's unicast data, if UE 116 is scheduled.

The PSBCH 1705 can have a common region to point to one or multiple of the zones for the PDCCHs 1710. The PSBCH 1705 also can have a separate region for each of the PDCCH zones. The PSBCH 1705 can have predefined resources, as a predefined physical channel, for example, which UE 116 can know beforehand. If there are multiple regions for PSBCH 1705, each of the regions can be predefined for the resources and UE 116 can know the resource allocation beforehand, hence UE 116 does not need to go to the regions that do not have association with the PDCCHs 1710. Alternatively, UE 116 performs blind decoding to determine the region for each of the beams.

The PSBCH 1705 can provide information to UE 116 about whether the PDCCH 1710 on particular slice is in the subframe, and where to find the PDCCH 1710. For example, in certain embodiments, a bit map is used. The bit map size is the number of PDCCH beams, where each bit is configured to tell whether the beam is carried in this subframe. For broadcast information, all of the beams can be used. Therefore, when all the beams are used, the bit map includes all ones. For multicast or unicast transmission, only a portion, i.e., some, of the beams is be used. Therefore, the bit map includes some ones and some zeros. Various embodiments include many other designs achieving the similar purpose.

When multiple RF chains or digital chains exist, the beams can have frequency division multiplexing (FDM). When configured for FDM, one beam can be in a frequency region, and another beam can be in another frequency region.

If PDCCH 1710 are not indicated on certain beams, then the PSBCH 1705 can indicate so. For example, if PSBCH 1705 indicates that PDCCH 1710 on B4 is not scheduled, then PDCCH 1710-a on B4 would not be illustrated in FIGURE 18.

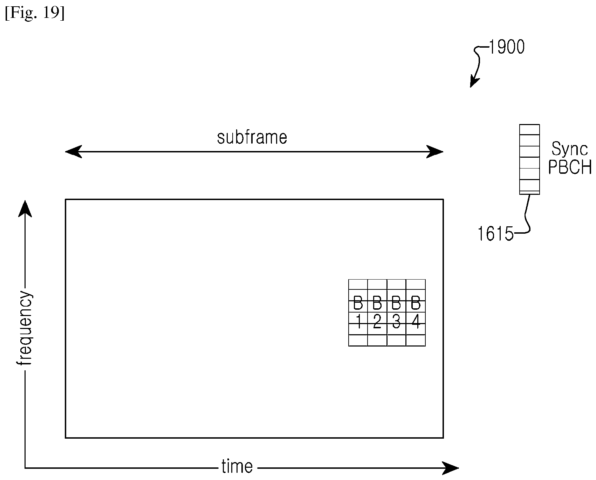

FIGURE 19 illustrates sync channel beams according to embodiments of the present disclosure. The embodiment of the sync channel beams shown in FIGURE 19 are for illustration only. Other embodiments could be used without departing from the scope of this disclosure.

In the example shown in FIGURE 19, the sync beams 1615 are steered for one round, and in each beam, the information (e.g., the beam identifier, the cell ID, and the like) can be repeated multiple times to support UE 116 with multiple RX beams. In certain embodiments, the sync beams 1615 can include another configuration, where the sync beams 1615 are steered for multiple rounds, and within one round, the information can be sent once.

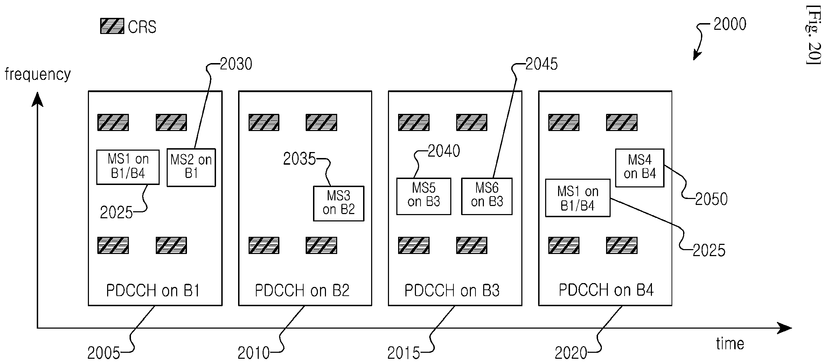

FIGURE 20 illustrates multiplexing of PDCCH on different beams in the time domain according to embodiments of the present disclosure. The embodiment of the multiplexing of PDCCH on different beams 2000 shown in FIGURE 20 is for illustration only. Other embodiments could be used without departing from the scope of this disclosure.

In certain embodiments, the data control beams can be multiplexed in the time domain. When the information (e.g., the resource allocation information) for UE 116 is included in multiple beams, BS 102 informs UE 116 MS about the beams. In response, UE 116 can decode the beams separately, or UE 116 can choose to decode some of the beams among all the beams which include the information for UE 116 to get the information.

In the example shown in FIGURE 20, four beams 2005, 2010, 2015 and 2020 are formed by steering. The beams include information (e.g., the resource allocation information) for various MS's. For example, Beam 1 (B1) 2005 includes resource allocation information for MS 1 2025 and resource allocation information MS2 2030. Beam 2 (B2) 2010 includes resource allocation information for MS3 2035. Beam 3 (B3) 2015 includes resource allocation information for MS5 2040 and resource allocation information for MS6 2045. Beam 4 (B4) 2020 includes resource allocation information for MS4 2050 and resource allocation information for MS1 2025. The information for MS1 2025 is on both beam B1 and B4. MS1 can decode B1 or B4 to get the information, i.e., MS1 can have two chances to decode the information. This increases the reliability for MS 1 to receive the resource allocation information.

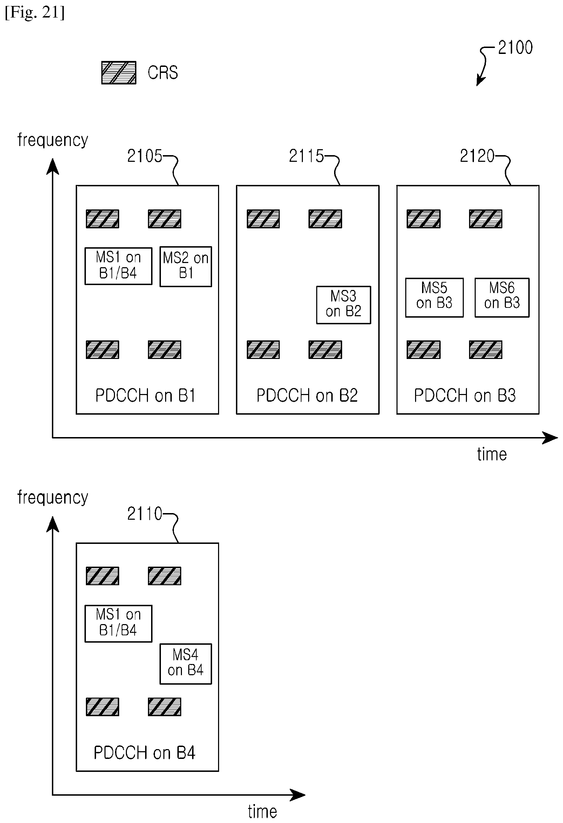

FIGURE 21 illustrates multiplexing of PDCCH on different beams in the spatial and time domain according to embodiments of the present disclosure. The embodiment of the multiplexing of PDCCH on different beams 2100 shown in FIGURE 21 is for illustration only. Other embodiments could be used without departing from the scope of this disclosure. The multiplexing of PDCCH on different beams 2100 allows MS1 (e.g., UE 116), whose information is included on multiple spatial beams to receive the information at one shot.

In certain embodiments, the data control beams can be multiplexed in the time domain and spatial domain. For example, if there is an MS whose data control information (e.g, the resource allocation for data) is included in two beams, then these two beams can be sent concurrently at the same time. Such information for the MS can be in the same time and frequency block over multiple beams in the space. If other beams include the information for MSs where each of the MS only has information included on one of the beams, those beams can be steered in the time domain.

BS 102 informs UE 116 about the scheduling of the data control beams containing the information for UE 116, and UE 116 can decode the beams. UE 116 can choose to decode some of the beams among all the beams that include the information for UE 116 to get the information. UE 116 can choose to decode the beams jointly.

In the example shown in FIGURE 21, B1 2105 and B4 2110 are sent at the same time and frequency, but with separation in the spatial domain. The scheduling information of when B1, B2, B3, B4 can be sent to the MSs. Which beam(s) include the resource allocation information for UE 116 can also be sent to UE 116. Then UE 116 can try to receive the relevant TX beam(s) for the resource allocation information. MS1 (e.g., UE 116) receive B1 2105 and B4 2110 at the concurrent timing for B1 2105 and B4 2110. MS2 can receive B1 2105 at the timing for B1 2105. MS4 can receive B4 2110 at the timing or B4 2110. MS2 may have interference from B4 2110 if B2 2115 and B4 2110 are not separated enough in the spatial domain, and the similar for MS4. To further reduce the interference, the information for MS2 and for MS4 on B2 2115 and B4 2110 respectively, can be scheduled in different frequency. MS3, MS5, MS6 can receive B2 2115, B3 2120, B3 2120 respectively at the timings of the PDCCH beams B2 2115, B3 2120, B3 2120, respectively.

For MS1 (e.g., UE 116), BS 102 can tell MS1 that the PDCCH for it is in two beams, B1 2105 and B4 2110, and the PDCCH on these two beams are carrying the information to MS1 at the same resource in time and frequency. Then MS1 can decode PSBCH first, and find out the resource location of PDCCH B1 and B4, such as by using the indication structure as in FIGURES 17 and 18, where in this particular case, B1 2105 and B4 2110 happen to be in the same time and frequency. Then, MS 1 can blind decode B1 2105 and B4 2110 to determine the resource allocation for MS1 carried in PDCCH on B1 2105 and B4 2110, to have data communication.

In certain embodiments, for MS-specific search space in PDCCH on beams, UE 116 can use a cyclic redundancy code (CRC) that can be related to the MS's radio network temporary identifier (RNTI) to blind decode the PDCCH on the beams that may carry the information for UE 116.

When there are multiple beams of PDCCH for UE 116, the CRC for blind decoding can be related to the PDCCH beam identifier, as well as the RNTI for UE 116. For such, UE 116 can use a different CRC to blind decode different beam of the PDCCH.

For example, if UE 116 has its information in PDCCH on beam 1 and beam 4, UE 116 can generate CRC1 to blind decode PDCCH on beam 1, and generate CRC2 to blind decode PCCCH on beam 4, where CRC1 and CRC2 can be the same or different. When CRC1 and CRC2 are different, it may be because the beam identifier of the beam carrying PDCCH can be used as one of the factors to generate the CRC.

Different CRC's for blind decoding PDCCH on different beams can be useful when independent processing for different PDCCH beams is used for the MS. The Same CRC for blind decoding PDCCH on different beams can be useful when possible joint processing for different PDCCH beams is used for the MS.

A dedicated control approach is used for PDCCH to carry downlink control information (DCI). A downlink control information (DCI) can be sent in a format that can include the MS-specific information and the common information for all MSs. The DCI carries downlink or uplink scheduling information as well as uplink power control commands. There can be multiple DCI formats, where some formats can be only for MS specific DCI, and some formats can be only for MS common information, and some formats can be for both the MS specific and MS common. One or multiple PDCCHs can be transmitted possibly using one or multiple transmission formats of DCI. A control channel element (CCE) consisting of some physical resources can be the minimum unit of transmission for PDCCH. A PDCCH can consist of one or multiple CCEs. Note that DCI and DCI format are for the communication information at the logical level, while PDCCH and CCE are at the physical level. PDCCH is the physical channel carrying the DCI, which is in DCI format, while PDCCH itself can have its own format which may have no explicit relationship with DCI format.

An MS can monitor a set of PDCCH candidates in terms of search spaces, where the search space can be defined by a set of PDCCH candidates and such definition can be using some formula or mapping method that can be predefined to UE 116. The formula or mapping method can be a mapping from system parameters (such as the MS's MAC ID, or RNTI, aggregation layer index, the number of the PDCCH candidates to monitor in the given search space, number of the CCEs for the given search space, and the like) to the indices of the CCEs corresponding to a PDCCH candidate of the search space.

The search space can have two types, MS-specific space and common space. MS-specific control information can be in the PDCCH in the MS-specific search space, while the common information can be in the PDCCH in the common search space. The common search spaces and MS-specific search spaces may overlap. UE 116 can monitor common search space and MS-specific search space, and perform blind decoding to decode PDCCHs. In some embodiments, the PDCCH only has common search space or only have MS-specific search space, and UE 116 only needs to monitor one type of search spaces correspondingly.

A CRC is attached to PDCCH information and the MAC ID, also referred the RNTI, is implicitly encoded in the CRC. To encode the MAC ID in the CRC, one example can be to scramble the MAC ID and then XOR with the CRC. Another example for encoding the MAC ID in the CRC can be to map the MAC ID to the CRC by using a hash function and the like. Yet another example for encoding the MAC ID in the CRC can be to generate the CRC by taking MAC ID as a parameter for the CRC generation, and there can be other similar examples.

For the PDCCHs in common search spaces, BS 102 can use a predefined CRC or reserved CRC, and this CRC can be common to many MSs. The reserved CRC can correspond to a predefined or reserved MAC ID or common MAC ID. One or multiple reserved CRCs can be used for one or multiple PDCCHs in the common search spaces. UE 116 can use the reserved or predefined CRC or the reserved or predefined MAC ID to blind decode the PDCCHs in the common search spaces.

For the PDCCHs in the MS-specific search spaces, for the information specific to an MS (such as UE 116), BS 102 uses CRC encoded with the MAC ID for UE 116. An example is to scramble the UE 116's MAC ID with the CRC by XOR operation. When UE 116 blind decodes the PDCCH, UE 116 uses its own MAC ID to XOR with the derived CRC to blind decode.

In certain embodiments, the scheduling information of when different data control beams are sent can be sent to the MSs. Which beam(s) include the resource allocation information for the MS can also be sent to the MS. Hence UE 116 can use the corresponding method to decode the information for UE 116. For example, as shown in the example in FIGURES 20 and 21, UE 116 (e.g., MS1) can use either decoding B1, B4 separately, or receive both B1 and B4 and try to decode the information for MS1 jointly.

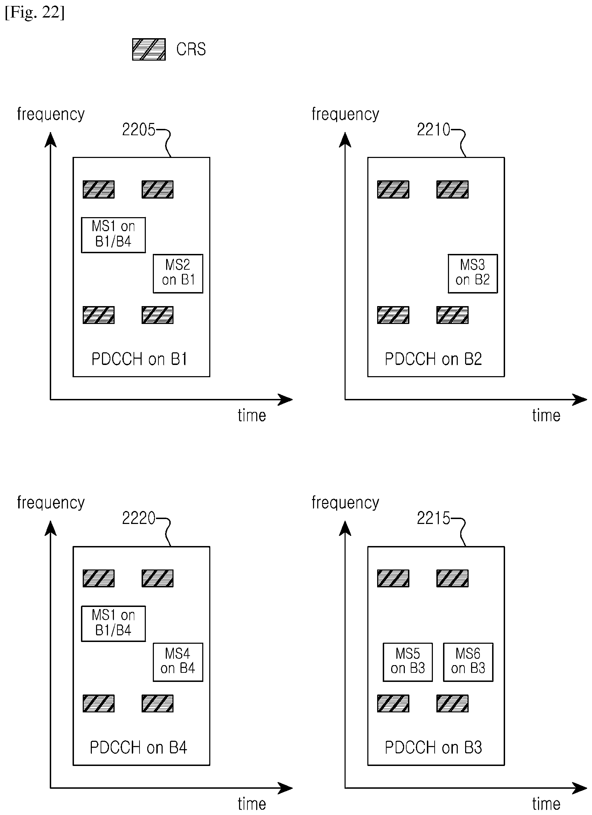

FIGURE 22 illustrates multiplexing of PDCCH on different beams in the spatial domain according to embodiments of the present disclosure. The embodiment of the multiplexing of PDCCH on different beams in the spatial domain 2200 shown in FIGURE 22 is for illustration only. Other embodiments could be used without departing from the scope of this disclosure. Multiplexing of PDCCH on different beams in the spatial domain 2200 allows a mobile station, such as UE 116 (e.g., MS1), which has information on multiple spatial beams to receive the information at one shot.

In certain embodiments, the data control beams can be multiplexed in the spatial domain. BS 102 informs UE 116 about the scheduling of the data control beams containing the information for UE 116, and UE 116 can decode the beams. UE 116 can choose to decode some of the beams among all the beams that include the information for UE 116 to get the information. UE 116 can choose to decode the beams jointly.

In the example shown in FIGURE 22, B1 2205, B2 2210, B3 2215, B4 2220 are all in the same time and frequency block, but they are in different spatial directions. The scheduling information of when B1 2205, B2 2210, B3 2215, B4 2220 are sent can be sent to UE 116. Which beam(s) include the resource allocation information for UE 116 can also be sent to UE 116. Then UE 116 can try to receive the relevant TX beam(s) for the resource allocation information. UE 116 receive B1 2205 and B4 2220 at the concurrent timing for B1 2205 and B4 2220. UE 115 (e.g., MS2) receives B1 2205 at the timing for B1 2205. UE 114 (e.g., MS4) receives B4 2205 at the timing or B4 2205. UE 115 (MS2) may have interference from B4 2220 if B2 2210 and B4 2220 are not separated enough in the spatial domain, and the similar for UE 114 (MS4). To further reduce the interference, the information for UE 115 (MS2) and for UE 114 (MS4) on B2 2210 and B4 2220 respectively, can be scheduled in different frequency. MS3, MS5, MS6 receive B2 2210, B3 2215, B3 2215 respectively at the timings of the PDCCH beams B2, B3, B3, respectively.

In certain embodiments, during the initial network entry (from power on to getting into the network), or from the idle state to the connected state, UE 116 can start with the synchronization channel (SCH) acquisition. BS 102 can send SCH with predefined number of beams. The SCH can carry the information about the physical broadcast channel (PBCH), such as how many beams are used for PBCH. UE 116 can acquire PBCH. The PBCH can be decoded by UE 116 after UE 116 gets the cell specific reference signal (CRS). BS 102 sends CRS at some resources, e.g., with the same beams that SCH or PBCH are on. UE 116 decodes PBCH. The PBCH can carry the information about the PDCCH, e.g., how many beams the PDCCH would be using.

UE 116 can measure the SCH beams. UE 116 can know which RX beams are good for receiving SCH beams. If SCH beams and PBCH beams are using the same physical beams (e.g., same direction, same beam width, etc), then UE 116 can use the good RX beams to receive the PBCH, while not using the bad RX beams to receive the PBCH, to reduce the energy consumption by UE 116. The good RX beams or the bad RX beams can be that some of the metric, (e.g., the signal to noise ratio (SNR), signal strength, signal to interference ratio (SIR), the signal to interference and noise ratio (SINR), reference signal received power, reference signal received quality, and the like), being beyond certain threshold, or below certain threshold, respectively. UE 116 can also measure the beams via CRS.

In certain embodiments, BS 102 sends PDCCH to UE 116. The PDCCH can carry the information about the resource allocation for the system information blocks (SIB)s, which is the important system information, typically broadcast by BS 102. The PDCCH beams can be sent over the same beams as the beams for SCH or PBCH. After UE 116 decodes the PDCCH, UE 116 can know where the SIBs, e.g., SIB1, SIB2, are located.

UE 116 can measure the PDCCH beams (e.g., via CRS). UE 116 determines which RX beams are good for receiving PBCH beams. If PBCH beams and PDCCH beams are using the same physical beams (e.g., same direction, same beam width, and the like), then UE 116 uses the good RX beams for receiving the PBCH to receive the PDCCH, while not using the bad RX beams to receive the PDCCH. This can reduce the energy consumption by UE 116.

In certain embodiments, BS 102 sends SIBs to the MSs, such as over the wide beams. The SIBs beams can be sent over the same beams as the beams for PDCCH, or SCH, or PBCH. Some of the SIBs include the information for UE 116 to send random access signal or uplink signal.

UE 116 measures the SIB beams (e.g., via CRS, or via channel state information reference signal (CSI RS)). UE 116 determines which RX beams are good for receiving SIB beams. If SIB beams and PDCCH beams are using the same physical beams (e.g., same direction, same beam width, and the like), then UE 116 uses the good RX beams for receiving the PDCCH to receive the SIBs, while not using the bad RX beams to receive the SIBs. This can reduce the energy consumption by UE 116.

In certain embodiments, after getting some SIBs including the information for UE 116 to send random access signal or uplink signal, UE 116 determines where to send uplink signal. UE 116 can then start the random access procedure.

UE 116 uses the good RX beams to transmit the uplink signal (this can help reduce the energy consumption). Alternatively, UE 116 uses all the good RX beams to transmit the uplink signal.

BS 102 can use all its RX beams to listen to the uplink signals of UE 116. If BS 102 steers the RX beams, UE 116 should repeat the uplink signal, e.g., for times of the number of the BS RX beams, so that BS 102 can receive the UE 116 uplink signal. If BS 102 does not steer the RX beams, but instead, BS 102 can use all the RX beams at once, then UE 116 may not need to repeat the uplink signal. The uplink signal may indicate which BS TX beam is good, such as by including the BS TX beam identifier.

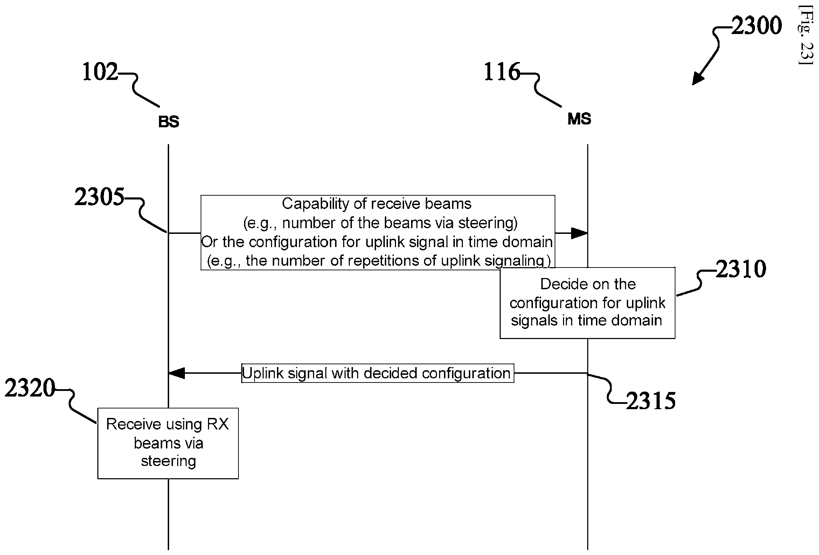

FIGURE 23 illustrates a process for deciding uplink signaling configuration according to embodiments of the present disclosure. The embodiment of the process 2300 shown in FIGURE 23 is for illustration only. Other embodiments could be used without departing from the scope of this disclosure.

In certain embodiments, BS's capability of whether it would be using the RX beams in a steering fashion, or whether these RX beams can be formed all at the same time, or how many times UE 116 should be repeating the uplink signaling, and the like, can be sent to the MSs, e.g., in one of the SIBs, or in the SIB which include the parameters or information for the random access. BS 102 transmits a message 2305 to UE 116 indicating a capability of the receive beams. For example, the BS 102 can tell UE 116 and the MSs:
- Number of the UL signaling repetition needed: 4
- Or: number of BS RX beams: 4, Method of forming: steering
- Or: number of BS RX beams: 4, Method of forming: all at once
- Or: number of BS RX beams: 4, Method of forming: beam1-2 steering, beam 3-4 steering, beam 1,3 at the same time, 2,4 at the same time

The method of forming can be coded, e.g., in previous cases, it can be coded as '00', '01', '10', respectively. In response, UE 116 determines 2310 the configuration for uplink signals in the time domain. Then, UE 116 transmits an uplink signal 2315 with the determined configuration. BS 102 then receives 2320 using the RX beams via steering.

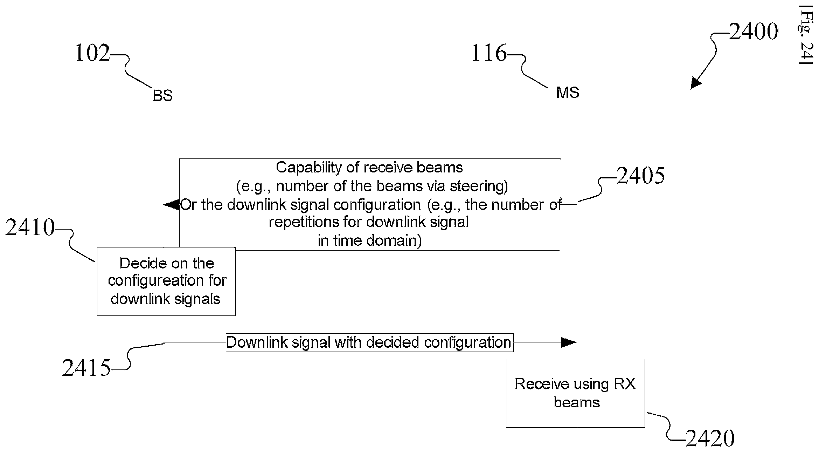

FIGURE 24 illustrates a process for deciding downlink signaling configuration according to embodiments of the present disclosure. The embodiment to of the process 2400 shown in FIGURE 24 is for illustration only. Other embodiments could be used without departing from the scope of this disclosure.

In certain embodiments, BS 102 can choose the PDCCH beams to send to UE 116, e.g., based on a request by UE 116, or based on its own choices. If it is based on the request from UE 116, UE 116 can use MS chosen MS RX beams to receive it. UE 116 can minimize (e.g., save) energy consumption. UE 116 can also reduce the repetition times for the PDCCH.

The PDCCH beams should be repeated in the time domain if UE 116 is using beam steering at the MS RX side in the time domain, i.e., MS RX beams cannot be formed at the same time, rather, at different times. The repeated times of the PDCCH in the time domain can be the number of the MS RX beams used to receive the PDCCH where the MS RX beams cannot be formed at the same time.

For example, if UE 116 has two RX beams to receive the PDCCH, and these two RX beams cannot be formed at the same time, rather, they are formed by steering, then the PDCCH can be repeated in the time domain twice.

In certain embodiments, it is better for UE 116 to transmit a message 2405 to inform BS 102 regarding its receiving beams and whether the receive beams can be formed at the same time or these RX beams are steering. The information can be delivered in UE 116 feedback to BS 102 in the uplink communication, e.g., together with the TX beam reporting. For example, in the random access channel, UE 116 can indicate the number of repetition the PDCCH should be, based on the number of its receive RX beams if these beams are formed by steering. The number of the repetition can be explicit, or implicit.

If there is only one RX beam (omni-direction as a special case for one RX beam), then it can be the default case where MS does not need to send anything to the BS about is RX beams.

When BS 102 chooses 2410 the PDCCH beams to send to UE 116 based on BS's own choice, since the MS does not know which PDCCH beams are chosen, UE 116 can use all its RX beams to receive. UE 116 also can use the good RX beams to receive.

In the PDCCH, BS 102 can send 2415 the information about the follow up PDSCH (physical downlink shared channel) for data communication. Then, UE 116 receives 2420 using RX beams.

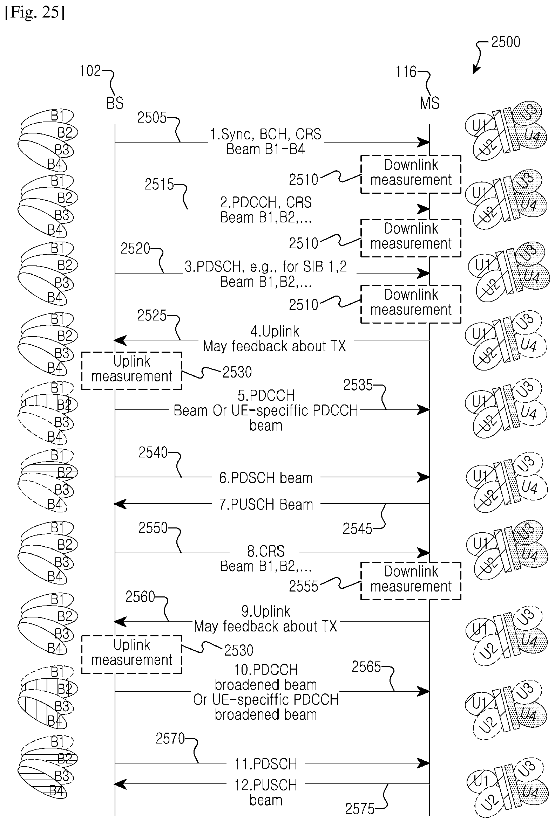

FIGURE 25 illustrates a process for BS MS communication with adjusting beams for data control and data communication according to embodiments of the present disclosure. The embodiment of the process 2500 shown in FIGURE 25 is for illustration only. Other embodiments could be used without departing from the scope of this disclosure. The embodiments of the BS MS communication with adjusting beams for data control and data communication occurs in the states such as initial network entry state, idle state. In the example shown in FIGURE 25, the beams with dashed lines are not used. In the MS, U1 and U2 are with one RF chain, while U3 and U4 are with another RF chain.

BS 102 transmits 2505 synch, BCH, CRS on B1-B4. UE 116 optionally performs a downlink measurement 2510. BS 102 transmits 2515 PDCCH, CRS on B1, B2, and so forth. BS 102 sends 2420 the PDSCH to UE 116. In certain embodiments, BS 102 sends 2420 the PDSCH on the same beam as PDCCH, and UE 116 receives the PDSCH on the same RX beams as it receives the PDCCH. UE 116 transmits an uplink message 2425 to BS 102. BS 102 optionally performs an uplink measurement 2530. BS 102 transmits 2535 a PDCCH beam or UE-specific PDCCH beam and transmits 2540 PDSCH. In response, UE 116 transmits 2545 a PUSCH to BS 102. BS 102 transmits 2550 CRS on beams B1, B2, and so forth. UE 116 optionally performs a downlink measurement 2555. UE 116 transmits an uplink message 2560 to BS 102. BS 102 transmits 2565 a PDCCH beam or UE-specific PDCCH beam and transmits 2570 PDSCH. In response, UE 116 transmits 2575 a PUSCH beam to BS 102. UE 116 can send the PUSCH on the same beam as the beams it uses to receive the PDSCH, and BS 102 can receive the PUSCH using the same RX beams as the ones UE 116 uses to receive the PDCCH.

In certain embodiments, as another application of the previous embodiments, for ACK/NACK beams from UE 116 or BS 102, the number of the repetitions can be determined by the RX beams capability.

In certain embodiments, BS 102 sends a reference signal to UE 116, so that UE 116 can measure about the wide beam, such as the beam at the PDCCH level. UE 116 can use all its RX beams to measure them. The reference signal can be repeated if UE 116 uses RX in a steering fashion.

In certain embodiments, UE 116 sends reference signals to BS 102, so that BS 102 can measure about the beams.

In certain embodiments, UE 116 performs downlink measurement and sends the feedback about the measurement to BS 102. BS 102 can then decide whether to broaden the PDCCH beam for UE 116. For example, multiple of the PDCCH beams can be used to deliver the PDCCH information.

PDCCH can be for one or multiple MSs. The times of the repetition of PDCCH should be related to the capability of all the MSs corresponding to the PDCCH, e.g., the times of the repetition times can be the maximum of the receive beams.

In certain embodiments, BS 102 sends PDCCH on a broadened beam, such as, by including the MS's resource allocation information in multiple of the wide beams.

BS 102 can also send the PDSCH on the same beams as PDCCH. UE 116 receives the information from those beams, by using the good RX beams. Based on whether BS RX beams are steering, or at the same time, (separate in frequency domain).

In the example shown in FIGURE 25, in step 11 wherein BS 102 transmits 2570 PDSCH, BS 102 chooses multiple beams for PDCCH to UE 116 and transmits PDCCH to UE 116 on multiple beams. UE 116 keeps using the good beams to receive the PDCCH. It is transparent to UE 116. UE 116 does not know which beams for PDCCH that BS 102 is using. UE 116 can use the same beams that it transmits uplink in step 10 (message 2565), to receive the downlink beams in step 11 (message 2570).

As an alternative, the PDCCH can be chosen, and BS 102 tells UE 116 about its choice, then UE 116 can use the proper RX to receive the PDCCH.

PDCCH on different beam can be of different content. UE 116 can decode multiple of the PDCCHs separately. UE 116 can have diversity of the PDCCH.

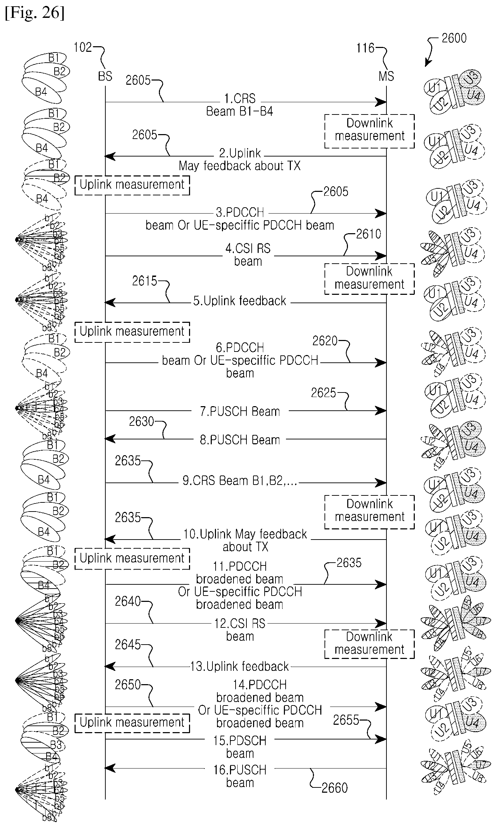

FIGURE 26 illustrates a process for BS MS communication with adjusting beams for data control and data communication according to embodiments of the present disclosure. The embodiment of the process 2600 shown in FIGURE 26 is for illustration only. Other embodiments could be used without departing from the scope of this disclosure. The embodiments of the BS MS communication with adjusting beams for data control and data communication occurs in a connected state. In the example shown in FIGURE 26, the beams with dashed lines are not used.

In certain embodiments, BS 102 sends reference signals on the narrow beams for the data communication. UE 116 measures the narrow TX beams. UE 116 can use its narrow beams to measure the narrow TX beams from BS 102.

In certain embodiments, the PDCCH can include the configuration of how UE 116 should be monitoring the CSI RS for the following data communication.

The data beam training, e.g., the CSI RS can be sent over the narrower beams within the beam or beams of PDCCH. Then the PDCCH can be sent to UE 116, including the resource allocation about the following data communication to UE 116.

Alternatively, the data beam training, e.g., the CSI RS can be sent over the narrower beams not necessarily within the PDCCH beam or beams for UE 116, rather, it can be over every possible narrower beam.

After the data beam training, BS 102 sends PDCCH to the MS, including the resource allocation about the following data communication to UE 116.

Step 1-3 2605: PDCCH beam(s) for UE 116 is selected based on MS feedback. Step 4-8: PDCCH configures data beam training for narrow beams within PDCCH beam(s). Data communication procedure is illustrated. In step 4 2610-2630, CSI RS is sent over the narrow beams (B3, B4) within current PDCCH beam 2. UE 116 can use the narrow beams corresponding to the wide beam B2, to receive the CSI RS, i.e., UE 116 uses (U1, U2, U3, U4) which is within the beam U1,U2 which can receive B2 with good quality. Assume u1 and u3 receive B3 and B4 with good quality. In step 5 2615, UE 116 can use the TX beams (U1, U3) which receive signal with good quality in step 4 2610. In step 6 2620, the PDCCH on B2 can carry the resource allocation for UE 116, e.g., the information on B2 should include information on B3, B4, for the data communication for UE 116. In Step 7 2625, UE 116 uses the same beams to receive as the beams used in step 5 2615. As an alternative, in step 6 2620, BS 102 can tell UE 116 which MS RX beams to use in step 7 2625, based on BS's uplink measurement or MS's feedback around step 5 2615. Step 9-11 2635: Beam broadening for PDCCH. Based on the wide beam, PDCCH beam for UE 116 is broadened from B2 to B2 and B4. Step 12-15 2640-2655: PDCCH configures data beam training for all narrow beams. Data communication procedure is illustrated. In step 12 2640, CSI RS is sent over all narrow beams. In step 13 2645, UE 116 can use the TX beams which receive signal with good quality in step 12 2640. In step 14 2650, the PDCCH on B2 and B4 can carry the resource allocation for UE 116, e.g., the information on B2 should include information on B3, B4, B8 for the data communication for UE 116. The information on B4 should also include information on B3, B4, B8 for the data communication for UE 116. In Step 15 2655, UE 116 can use the same beams (U2, U3, U7) to receive as the beams used in step 13 2645. As an alternative, in step 14 2650, BS 102 informs UE 116 which MS RX beams to use in step 15 2655, based on BS's uplink measurement or MS's feedback around step 13 2645.

In certain embodiments, UE 116 measures the signal strength of one or multiple base stations, via BSs synchronization channel, broadcast channel, data control channel, reference signals, pilots, and the like. The measurement metric can be, e.g., signal to noise ratio, signal to interference ratio, signal to interference plus noise ratio, reference signal received power, reference signal received quality, and the like. The measurement can be for per base station, or for per BS TX and MS RX beam pair, or for per BS TX beam, or for per MS RX beam, and the like. The measurement can be reported to one or multiple base stations. The measurement reporting can be organized in a way that it captures whether one or multiple beams (TX or RX beams) can be formed concurrently, or formed not concurrently but rather by steering.

If certain a measurement meets certain conditions or trigger conditions, UE 116 sends the measurement report to one or multiple BSs. The conditions for different operations or for different communications (e.g., for control channel communication, or for data channel communications) can be different. For example, the conditions for UE 116 to report the measurement about the PDCCH so that the BSs can decide the transmission schemes can be different from the conditions for UE 116 to report the measurement about the data channel.

The base stations or the network can decide different operations or different communications schemes, where the decisions can be based on the reported measurement and the capabilities of TX and RX beams at the BSs and/or the MSs. There can be conditions or trigger conditions for the BSs or networks to make the decisions but these conditions may not be necessarily the same as the ones for the MSs to report the measurement.

In certain embodiments, one or multiple transmission schemes can be used for multiple base stations to communicate to UE 116.

One transmission scheme can be a non-concurrent communication. UE 116 receives the information from multiple BSs (e.g., BS 102 and BS 103) in different times. Multiple base stations send different information or the same information to UE 116. When UE 116 includes one RF chain or multiple RF chains, UE 116 can form beams to receive the information. The reporting from UE 116 to the base stations does not need to let BS 102 know MS RX capability about MS RF chains and beams. The BS 102 configures UE 116 to report its preferred TX beams, for each of the BSs. BS 102 can tell UE 116 that it is for independent information from different BS.

Another transmission scheme can be a concurrent communication. UE 116 receives the information from multiple base stations (e.g., BS 102 and BS 103) at the same time, or in other words, concurrently. Multiple base stations can send different information or the same information to UE 116. BS 102 informs UE 116 when the information from different BS is different, so that UE 116 does not need to combine. BS 102 also informs UE 116 when the information from different BS beams is the same, so that UE 116 can combine.

UE 116 can receive the different information from different base stations via different RX beams, which can be formed concurrently. UE 116 can receive the same information from different base stations via one or multiple RX beams, which can be formed concurrently. If the BSs transmit the same information to UE 116 and if UE 116 has an RF chain that can form the receive beams to receive beams from the BSs (e.g., beams from BS 102 and BS 103) concurrently, then the RF chain may be used. If the BSs transmit the same information to UE 116 and if UE 116 has multiple RF chain where each chain can form the receive beam to receive from the BSs (e.g., BS 102 and BS 103) concurrently, multiple RF chains may be used and they can combine in the receive process.

For concurrently formed multiple RX beams, multiple RF chains may be required of UE 116, so that these multiple RF chains of UE 116 can form the RX beams concurrently. This is similar to a MIMO communication with rank more than 1 (e.g., a rank-2 MIMO communication if there are two base stations and two streams to two of the RX beams of the MS concurrently).

The reporting from UE 116 may let BSs or the network know the information about the capability of the concurrent communications with multiple base stations or beams. The information can be, e.g., the BSs TX beams that the MS may prefer (such as in a format that all the BSs TX beams in a set or group can be used for concurrent communication to the MS), or MS RX capability about MS RF chains and beams (such as which RX beams of the MS cannot be formed concurrently).

In certain embodiments, for concurrent beam communication in-between the multiple base stations and UE 116, including the control beams, data control beams, data communication, and the like, there can be multiple ways for the network or the base stations to determine which beams can be concurrently used or not. This can be done, for example, via RF beam forming feedback if the beams are at the RF level, or via digital beam forming feedback if the beams are at the digital level, or via both the digital and RF beam forming.

In a first alternative (Alt. 1), BS 102 configures UE 116 to report its preferred TX beams. In the reporting, UE 116 indicates the TX beams that are good for concurrent communication with a certain number of information streams, or communication with a certain rank (e.g., rank 2), and the number of the concurrent streams or the capability (maximum allowable number of the concurrent streams) of the concurrent communication, or the rank, and places the TX beams in sets, where each set of the TX beams can be used for a concurrent communication with a certain number of streams, or communication with a certain rank (e.g., a rank 2 communication). Then the BSs can perform the concurrent communication with a certain number of streams, or communication with a certain rank (e.g., a rank 2 communication). The BSs can perform the concurrent communication with a certain number of streams where the number of steams can be any number no greater than the capability (maximum allowable number of the concurrent streams) of the concurrent communication. The BSs or the network inform UE 116 which TX beams are used and when they are transmitted, so that UE 116 can use the corresponding RX beams to receive.

In a second alternative (Alt. 2), another alternative about reporting is that the BSs can configure UE 116 to report the TX RX pairs. UE 116 also signals its capability about its RX beams regarding to whether they can be concurrently formed or not, or concurrently used or not. For example, UE 116 can signal the sets of the MS RX beams that cannot be formed concurrently (e.g., because they should be from the same RF chain but the RF chain is not able to form them concurrently) where each set of MS RX beams includes the MS RX beams that cannot be formed concurrently. (Note that such signal about MS RX beams capability can be transmitted any time, e.g., in the initial network entry, or after initial network entry, and if the information has already transmitted before and the information does not change, the BSs or the network can cache the information so that UE 116 does not need to transmit it again). Then, the BSs can coordinate and decide whether it is possible to have concurrently communication and how. The BSs or the network can decide the concurrent communication with a certain number of streams, or communication with a certain rank (e.g., a rank 2 communication). Then the BSs or the network can inform UE 116 which MS's RX beams/ RF chains should be used. In certain embodiments, the BSs or the network can inform UE 116 which BSs TX beams are used. Then, UE 116 can use the corresponding RX beams to receive.

In a third alternative (Alt. 3), the BS's, such as BS 102 and BS 103, configure UE 116 to report the TX RX pairs in sets, where each set of the TX RX pairs are ok for a concurrent communication with a certain number of streams, or communication with a certain rank (e.g., a rank 2 communication), and the number of the concurrent streams, or the rank. Then the BSs coordinate and perform the concurrent communication with a certain number of streams, or communication with a certain rank (e.g., a rank 2 communication). The BSs inform UE 116 regarding which MS's RX beams/RF chains should be used. Alternatively, the BSs or the network informs UE 116 regarding which TX beams are used. Then UE 116 can use the corresponding RX beams to receive.

In certain embodiments, UE 116 performs RF beam forming feedback by sending the following to BS 102 or the network, such as by using the three alternative ways in the previous embodiment. That is UE 116 can send the information of capability on RX beams and the good pairs of BS TX and MS RX to BS 102 or send the sets of beam pairs to BS 102 or the network, where the RX beams in the same set can be used at the same time. In certain embodiments, UE 116 can choose and send one or multiple sets of preferred TX beams where the TX beams within a set can be concurrently received by MS RX beams.

BS 102 then further configures UE 116 to perform the measurement on the pilots or the reference signals, such as the channel state information reference signal (CSI-RS) and feedback about the measurement (e.g., channel quality indication (CQI) feedback), for digital beam forming. BS 102 then decides the transmission schemes. If no digital beam forming is needed, or digital beam forming is fixed, BS 102 can decide the transmission schemes based on RF beam forming feedback.

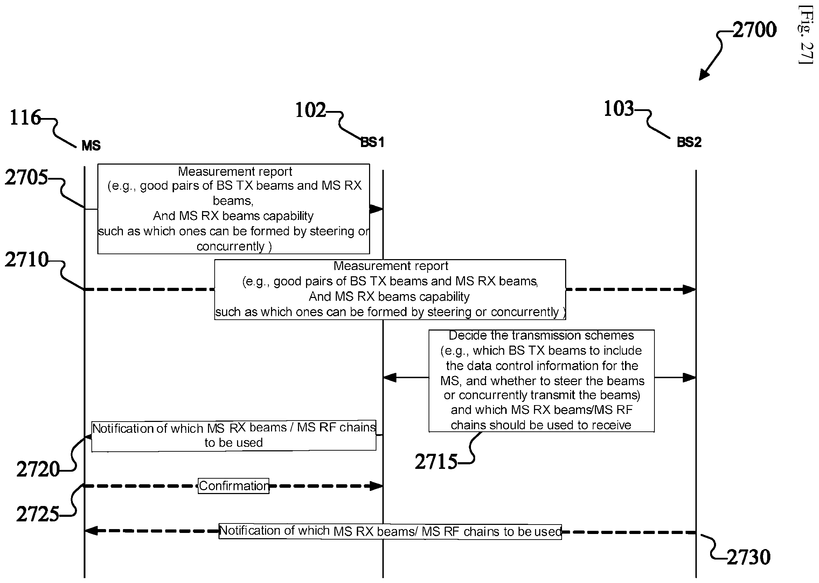

FIGURE 27 illustrates a process using downlink measurement/ reporting and the MS's beam capabilities for the BSs to decide the transmission schemes according to embodiments of the present disclosure. The embodiment of the process shown in FIGURE 27 is for illustration only. Other embodiments could be used without departing from the scope of this disclosure. In the example shown in FIGURE 27, a dashed line means the signal may be omitted (e.g., UE 116 can send the information (e.g., report the measurements on multiple base stations, confirmation, etc.) to one of the BSs; one of the BSs can send the signaling back UE 116 rather than all the multiple base stations to send the signaling) if the signal is already conveyed or if the signal is not needed.

UE 116 performs the downlink measurement on the beams, e.g., measurement on the wide beams, (e.g., formed by the RF beam forming), or measurement on the data control beams, and the like. UE 116 reports the measurements 2705 about one or multiple base stations to BS 102. UE 116also can report the measurements 2710 about one or multiple base stations to BS 103. The measurement reporting 2705, 2710 can be configured by BS 102 or the network in a way to take into account the possible concurrent communications (such as any methods that are in the previous embodiments) if needed.

Then BS 102 and BS 103, or the networks, communicate among themselves to make a joint decision 2715 regarding the transmission schemes, such as which BS TX beams to include the information (e.g., the data control information in PDCCH) for UE 116, whether to include the data control information to more or fewer of the beams (to broaden the PDCCH beams for UE 116 and to narrow the PDCCH beams for UE 116, respectively), and whether to steer the beams (steering the beams means the beams are formed in the time domain one after another, not concurrently) or concurrently transmit the beams, and so forth), and which MS RX beams / MS RF chains should be used to receive, for different BSs. BS 102 notifies 2720, and in certain embodiments, BS 103 notifies 2730 UE 116 regarding how to receive the beams, such as which MS RX beams / MS RF chains to be used to receive, and whether to combine the information on different beams if they are including the same information, and so forth. UE 116 sends the confirmation 2725 to the BSs or the network.

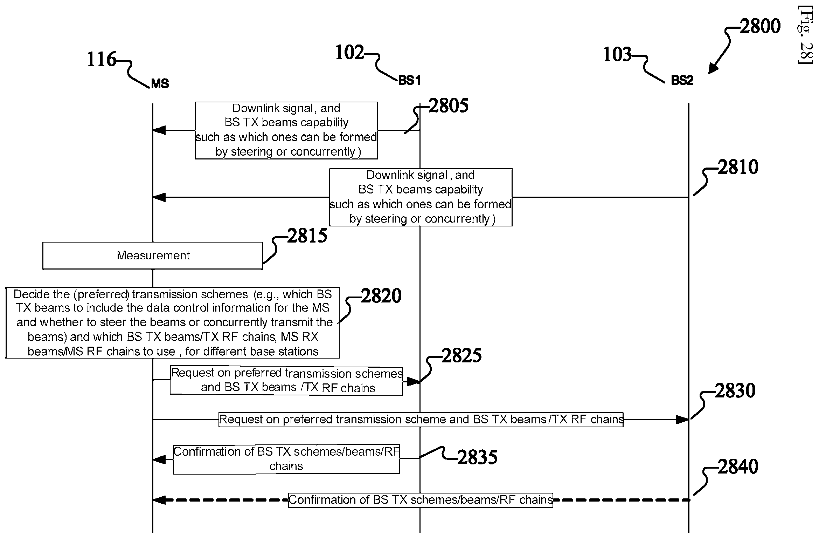

FIGURE 28 illustrates a process using downlink measurement/ reporting and the BS's beam capabilities for the MSs to decide its preferred transmission schemes according to embodiments of the present disclosure. The embodiment of the process 2800 shown in FIGURE 28 is for illustration only. Other embodiments could be used without departing from the scope of this disclosure. In the example shown in FIGURE 28, the dashed line means the signal may be omitted (e.g., UE 116 can send the information (e.g., report the measurements on multiple base stations, confirmation, etc.) to one of the BSs; one of the BSs can send the signaling back UE 116 rather than all the multiple base stations to send the signaling) if the signal is already conveyed or if the signal is not needed.

In certain embodiments, the BSs can send the downlink reference signals 2805, 2810 via downlink TX beams to UE 116. Each BS can also inform UE 116 regarding its BS TX beams capability as to which BS TX beams can be formed concurrently (such as by using multiple RF chains), or which BS TX beams cannot be formed concurrently (such as via steering).

MS can perform the downlink measurement 2815 on the beams, such as, by measurement on the wide beams, (e.g., formed by the RF beam forming), or measurement on the data control beams, and so forth.

UE 116 decides 2820 the preferred transmission schemes. For example, UE 116 can decide which BS TX beams to include the information (e.g., the data control information in PDCCH) for UE 116, whether to include the data control information to more or fewer of the beams (to broaden the PDCCH beams for UE 116 and to narrow the PDCCH beams for UE 116, respectively), and whether to steer the beams (steering the beams means that the beams are formed in the time domain one after another, not concurrently) or concurrently transmit the beams, and so forth), and which MS RX beams / MS RF chains should be used to receive, for different BSs.

UE 116 sends a request 2825 to BS 102 and a request 2830 to BS 103, or the network, regarding its preferred transmission schemes and BSs TX beams / TX RF chains to be used. The BSs and network can send the confirmation 2835, 2840 to UE 116. Alternatively, the BSs or the network can override the UE 116 preference and signal UE 116 regarding the TX beams and transmission schemes (such as whether UE 116 needs to combine the beams if they send the same information). UE 116 uses the appropriate MS RX beams / MS RF chains and appropriate receive algorithm to receive, such as by combining the information on different beams if they are including the same information, and so forth.

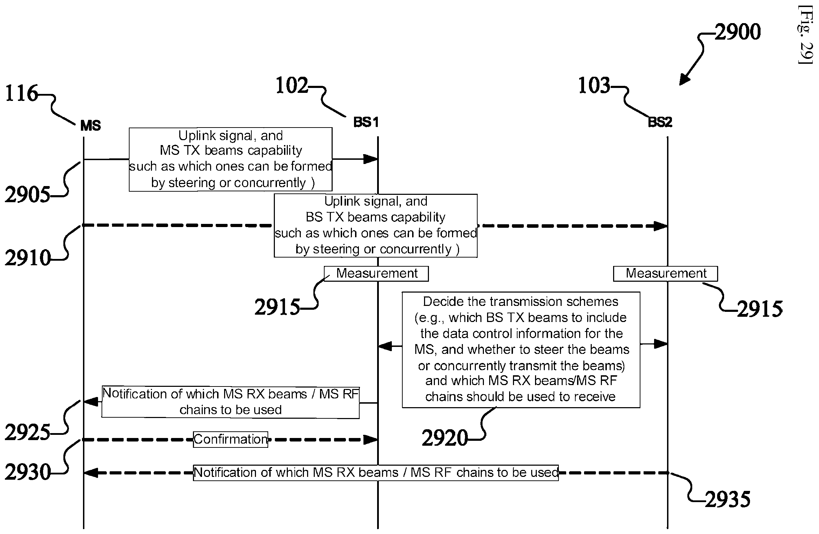

FIGURE 29 illustrates a process uplink measurement/ reporting and the MS's beam capabilities for the BSs to decide the transmission schemes according to embodiments of the present disclosure. The embodiment of the process 2900 shown in FIGURE 29 is for illustration only. Other embodiments could be used without departing from the scope of this disclosure. In the example shown in FIGURE 29, the dashed line means the signal may be omitted (e.g., UE 116 can send the information (e.g., report the measurements on multiple base stations, confirmation, etc.) to one of the BSs; one of the BSs can send the signaling back UE 116 rather than all the multiple base stations to send the signaling) if the signal is already conveyed or if the signal is not needed.

In certain embodiments, UE 116 sends uplink signal 2905, 2910, including uplink reference signal, to the BS 102 and BS 103, or the network. UE 116 can also send the MS TX beams capability such as regarding to which beams can be formed by steering (not concurrently) or concurrently. BS 102 and BS 103 can each perform the uplink measurement 2915 on the beams, such as by performing measurement on the wide beams, (e.g., formed by the RF beam forming), or measurement on the narrow beams, and so forth.

Then the base stations or the networks can communicate among themselves to make a joint decision 2920 regarding the transmission schemes, such as which BS TX beams to include the information (e.g., the data control information in PDCCH) for UE 116, whether to include the data control information to more or fewer of the beams (to broaden the PDCCH beams for UE 116 and to narrow the PDCCH beams for UE 116, respectively), and whether to steer the beams (steering the beams means that the beams are formed in the time domain one after another, not concurrently) or concurrently transmit the beams, and so forth), and which MS RX beams / MS RF chains should be used to receive. The base stations then notify 2925, 2935 UE 116 regarding how to receive the beams, such as which MS RX beams / MS RF chains to be used to receive, and whether to combine the information on different beams if they are including the same information, and so forth. UE 116 sends the confirmation 2930 to the BSs or the network.

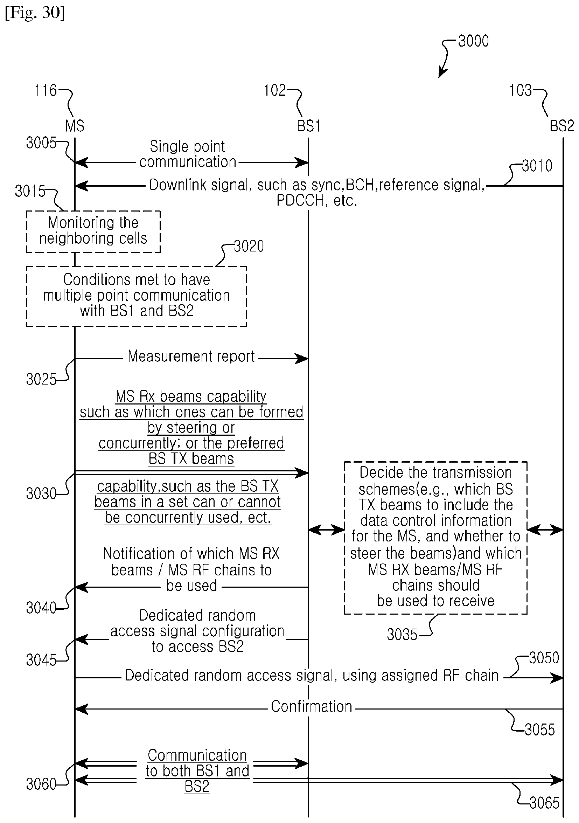

FIGURE 30 illustrates a process using downlink measurement/ reporting and the MS's beam capabilities for the BSs to decide the transmission schemes according to embodiments of the present disclosure. The embodiment of the process 3000 shown in FIGURE 30 is for illustration only. Other embodiments could be used without departing from the scope of this disclosure.

In certain embodiments, UE 116 at first communicates 3005 with one of the BSs, such as BS 102. UE 116 can receive downlink signal 3010, such as a sync, BCH, reference signal, PDCCH, or the like, from BS 103. UE 116 also monitors 3015 the neighboring cells. If certain conditions are met 3020, such that a new base station will be joining the set of the BSs with which UE 116 will communicate, UE 116 starts communicating using one or more embodiments for multiple base stations described herein above.

UE 116 performs the downlink measurement on the beams, such as by performing measurement on the wide beams, (e.g., formed by the RF beam forming), or measurement on the data control beams, and so forth. UE 116 reports 3025 the measurements about one or multiple base stations to BS 102. The measurement reporting 3025 can be configured by the base stations or the network in a way to take into account the possible concurrent communications (such as one or methods described in the embodiments herein above) if needed. That is, UE 116 reports MS RX beam capability in signal 3030. Then the base stations or the networks communicate among themselves to make a joint decision 3035 on the transmission schemes, such as which BS TX beams to include the information (e.g., the data control information in PDCCH) for UE 116, whether to include the data control information to more or fewer of the beams (to broaden the PDCCH beams for UE 116 and to narrow the PDCCH beams for UE 116, respectively), and whether to steer the beams (steering the beams means that the beams are formed in the time domain one after another, not concurrently) or concurrently transmit the beams, and so forth), and which MS RX beams / MS RF chains should be used to receive. The already connected base stations then notify 3040 UE 116 regarding how to receive the beams, such as which MS RX beams / MS RF chains to be used to receive, and whether to combine the information on different beams if they are including the same information, and so forth. UE 116 sends the confirmation to the BSs or the network. The already connected BSs ask UE 116 to use the dedicated random access signal to access the new BS to be connected, and the dedicated random access signal configuration 3045, 3050 is sent to UE 116. Then UE 116 sends the dedicated random access signal to access the new BS (e.g., BS 103). BS 103 sends confirmation 3055 to UE 116. UE 116 uses the MS RX beams as signaled by the BSs earlier, to receive 3060, 3065 the information from the multiple BSs including BS 103, such as the PDCCH, etc. The decision about the transmission schemes that the base stations can also happen after UE 116 is connected to BS 103, rather before UE 116 sends the random access signal to BS 103.

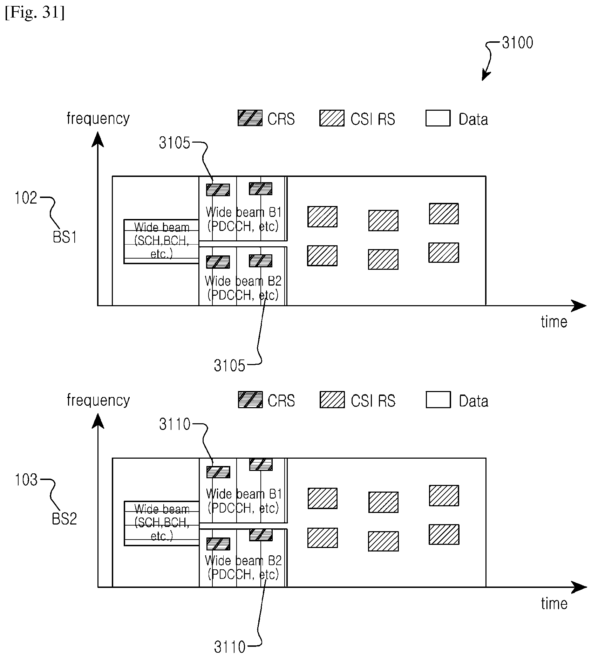

FIGURE 31 illustrates multiplexing in frequency domain for PDCCH according to embodiments of the present disclosure. The embodiment of the multiplexing in the frequency domain 3100 shown in FIGURE 31 is for illustration only. Other embodiments could be used without departing from the scope of this disclosure.

In certain embodiments, BS 102 and BS 103 perform multiplexing in the frequency domain for control or data channel, such as data control channel PDCCH. BS 102 and BS 103 coordinate to use different frequencies for different beams. For example, PDCCH beams for BS 102 can be located differently from PDCCH beams for BS 103 in the frequency domain.

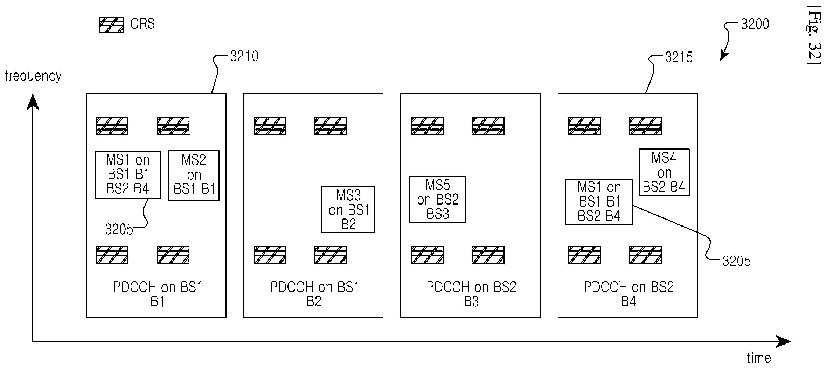

FIGURE 32 illustrates multiplexing in time domain for PDCCH according to embodiments of the present disclosure. The embodiment of the multiplexing in the time domain 3200 shown in FIGURE 32 is for illustration only. Other embodiments could be used without departing from the scope of this disclosure.

In certain embodiments, BS 102 and BS 103 perform multiplexing in time domain for control or data channel, such as data control channel PDCCH, and they can coordinate to use different time for different beams. For example, PDCCH beams for BS 102 can be located differently from PDCCH beams for BS 103 in time domain.

BS 102 and BS 103 can include the data control information for UE 116 in one or multiple PDCCH beams. For example, the data control information for MS1 3205 can be included in both PDCCH on BS1 (e.g., BS 102) beam B1 3210, and PDCCH on BS2 (e.g., BS 103) beam B4 3215. When they are multiplexed in the time domain, MS1 can receive the information for MS1 in these two beams from two base stations, in different time (e.g., the same information, multiple copies at different time, to enhance the reliability).

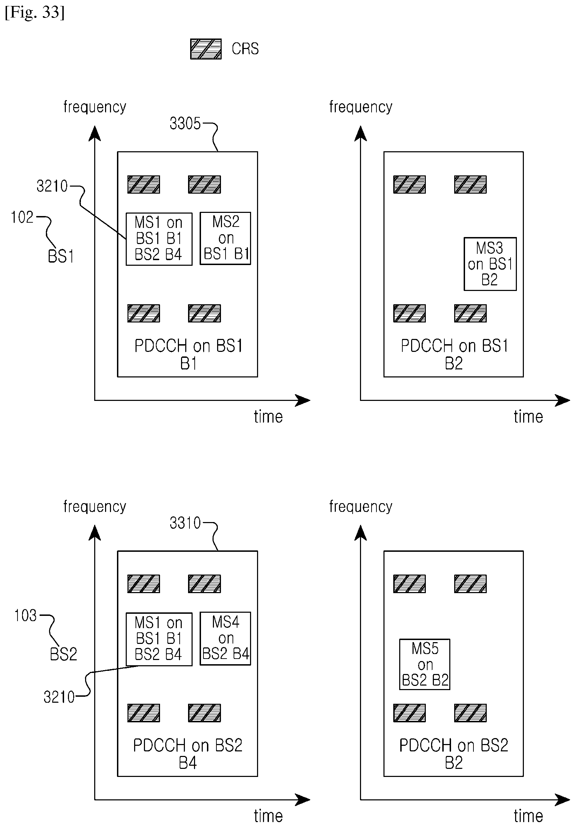

FIGURE 33 illustrates multiplexing in spatial domain for PDCCH according to embodiments of the present disclosure. The embodiment of the multiplexing in the spatial domain 3300 shown in FIGURE 33 is for illustration only. Other embodiments could be used without departing from the scope of this disclosure.

In certain embodiments, BS 102 and BS 103 perform multiplexing in spatial domain for control or data channel, such as PDCCH, and BS 102 and BS 103 coordinate to use different directions for different beams. For example, PDCCH beams for BS 102 can be located differently from PDCCH beams for BS 103 in spatial domain.

BS 102 and BS 103 can include the data control information for an MS in one or multiple PDCCH beams from different BSs in different directions but in the same frequency/time domain. For example, the data control information for MS1 3305 can be included in both PDCCH on BS1 beam B1 3310, and PDCCH on BS2 beam B4 3320. When the information for MS1 is multiplexed in the spatial domain, but the information for MS1 is allocated in the exact same frequency/time domain, MS1 can receive the information for MS1 in these two beams from BS 102 and BS 103 concurrently (e.g., the same information, multiple copies at different time, to enhance the reliability; or different information, but with two MS RX beams which can be formed concurrently to receive).

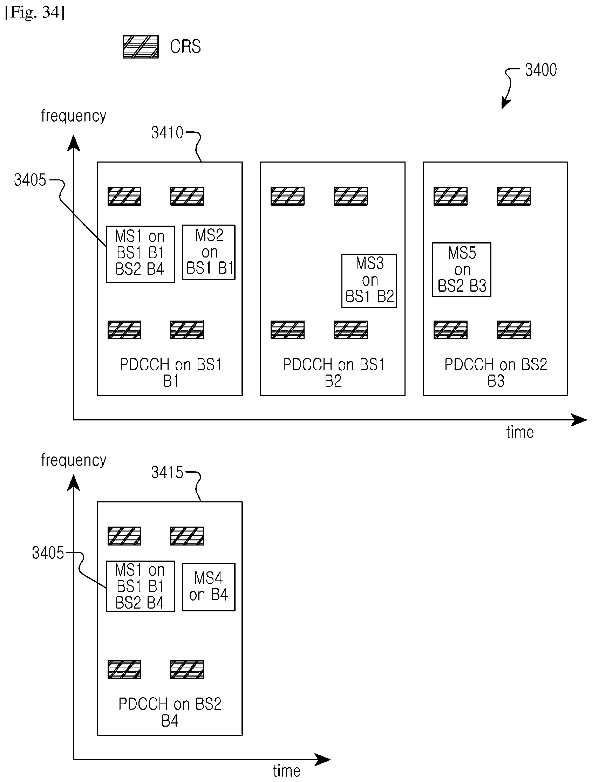

FIGURE 34 illustrates multiplexing in spatial and time domains for PDCCH according to embodiments of the present disclosure. The embodiment of the multiplexing in spatial and time domains for PDCCH 3400 shown in FIGURE 34 is for illustration only. Other embodiments could be used without departing from the scope of this disclosure.

In certain embodiments, BS 102 and BS 103 perform multiplexing in a combination of frequency domain, time domain, and spatial domain for control or data channel, such as PDCCH. BS 102 and BS 103 coordinate to use different directions for different beams. For example, PDCCH beams BS 102 can be located differently from PDCCH beams for BS 103 in spatial and time domain.

BS 102 and BS 103 can include the data control information for an MS in one or multiple PDCCH beams from different BSs in different directions but in the same frequency/time domain. For example, the data control information for MS 1 3405 can be included in both PDCCH on BS1 (e.g., BS 102) beam B1 3410, and PDCCH on BS2 (e.g., BS 103) beam B4 3415. When they are multiplexed in the spatial domain, but the data control information for MS 1 3405 is allocated in the exact same frequency/time domain, MS1 can receive the information for MS1 3405 in these two beams 3410, 3415 BS 102 and BS 103 concurrently (e.g., the same information, multiple copies at different time, to enhance the reliability; or different information, but with two MS RX beams which can be formed concurrently to receive).

In certain embodiments, for concurrently communication in-between multiple BSs and UE 116, the timing advance (TA) will be adjusted so that UE 116 can receive the signal concurrently over one or multiple different beams, from one or multiple different transmitting points.

In certain embodiments, UE 116 can use blind decoding to decode PDCCH beams from multiple base stations, and the blind decoding procedure can be similar to the one that UE 116 can use to decode PDCCH beams from a single base station. UE 116 can have different CRCs to decode PDCCH from multiple base stations, for example, UE 116 can use CRC1 to decode the PDCCH from a first base station, and UE 116 can use CRC2 to decode the PDCCH from a second base station.

Although the present disclosure has been described with an exemplary embodiment, various changes and modifications may be suggested to one skilled in the art.

## Claims

1. A user equipment (116) comprising:
a plurality of antennas configured to communicate with at least one base station (102, 103); and
a processing circuitry coupled to the plurality of antennas,
wherein the processing circuitry is configured to receive at least one downlink data control channel from the at least one base station (102, 103), wherein the at least one downlink data control channel is transmitted through a plurality of transmit (Tx) beams and is configured to include resource allocation information intended for the user equipment (116), wherein each of the plurality of Tx beams is configured to carry a cell specific reference signal (CRS) and a beam identifier,
wherein the processing circuitry is further configured to measure the plurality of Tx beams and a plurality of Rx beams corresponding to the Tx beams;
wherein the processing circuitry is further configured to transmit a measurement report on the CRS to the at least one base station (102, 103), wherein the measurement report on the CRS includes the measurement result on the plurality of Tx beams; and
wherein the processing circuitry is further configured to receive, from the at least one base station (102, 103), a message about a decision regarding the plurality of Tx beams to be used for the transmission of the data control channel, the data control channel being transmitted on the decided Tx beams, and wherein the processing circuitry is configured to receive the data control channel using the Rx beams corresponding to the decided Tx beams, wherein the decision is based on a capability of user equipment regarding whether the user equipment(116) can receive a plurality of Rx beams concurrently.

2. The user equipment (116) as set forth in Claim 1, wherein the user equipment (116) is configured to receive the at least one downlink data control channel based on a coordinated multipoint transmission.

3. The user equipment (116) as set forth in Claim 1, wherein the at least one downlink data control channel is one of:
mapped to different time/frequency resource; and
mapped to same time/frequency resource, and
wherein the processing circuitry is configured to process at least one signal related to the at least one downlink data control channel.

4. A base station (102, 103) comprising:
a plurality of antennas configured to communicate with a user equipment (116); and
a processing circuitry coupled to the plurality of antennas,
wherein the processing circuitry is configured to transmit at least one downlink data control channel to the user equipment (116), wherein the at least one downlink data control channel is transmitted through a plurality of transmit (Tx) beams and is configured to include resource allocation information intended for the user equipment (116), wherein each of the plurality of Tx beams is configured to carry a cell specific reference signal (CRS) and a beam identifier,
wherein the processing circuitry is further configured to receive a measurement report on the CRS from the user equipment(116), wherein the measurement report on the CRS includes a measurement result on the plurality of Tx beams; and
wherein the processing circuitry is further configured to transmit a message about a decision regarding the plurality of Tx beams to be used for the transmission of the data control channel, the data control channel being transmitted on the decided Tx beams, wherein the decision is based on a capability of user equipment regarding whether the user equipment(116) can receive a plurality of Rx beams concurrently.

5. The base station (102, 103) as set forth in Claim 4, wherein the processing circuitry is configured to transmit the at least one downlink data control channel based on a coordinated multipoint transmission.

6. The base station (102, 103) as set forth in Claim 4, wherein the processing circuitry is configured to:
generate information related to a decision regarding whether the user equipment (116) decodes the information intended for the user equipment (116) separately or jointly, and
transmit the information related to the decision to the user equipment (116),
wherein the information related to the decision is generated based on at least one of a mobility of the user equipment (116) and information related to a measurement on a cell specific reference signal (CRS), wherein the information related to the measurement is received from the user equipment (116).

7. The base station (102, 103) as set forth in Claim 4, wherein the processing circuitry is configured to receive, from the user equipment (116), information related to a measurement on a CRS performed by the user equipment (116).

8. A method comprising:
communicating with a user equipment (116) via a plurality of transmission (Tx) beams;
transmitting, by at least one base station (102, 103), at least one downlink data control channel to the user equipment (116), wherein the at least one downlink data control channel is transmitted through a plurality of Tx beams and is configured to include resource allocation information intended for the user equipment (116), wherein each of the plurality of Tx beams and the each of the plurality of Tx beams is configured to carry a cell specific reference signal (CRS) and a beam identifier;
receiving a measurement report on the CRS from the user equipment(116), wherein the measurement report on the CRS includes a measurement result on the plurality of Tx beams; and
further transmitting, by the at least one base station (102, 103), a message about a decision regarding the plurality of Tx beams to be used for the transmission of the data control channel, the data control channel being transmitted on the decided Tx beams, wherein the decision is based on a capability of user equipment regarding whether the user equipment(116) can receive a plurality of Rx beams concurrently.

9. The method as set forth in Claim 8, wherein transmitting comprises transmitting the at least one downlink data control channel based on a coordinated multipoint transmission.

10. The user equipment (116) as set forth in Claim 1, wherein the user equipment (116) processing includes at least one of:
decoding the at least one downlink data control channel transmitted through a first Tx beam of the decided TX beams using a first cyclic redundancy code (CRC) and decoding the at least one downlink data control channel transmitted through a second Tx beam of the decided TX beams using a second CRC;
decoding the at least one downlink data control channel transmitted through the decided TX beams using a same CRC;
decoding the at least one downlink data control channel concurrently transmitted through the decided TX beams in a plurality of spatial directions; and
decoding the at least one downlink data control channel transmitted through the decided TX beams at different times a plurality of spatial directions.

11. The base station (102, 103) as set forth in Claim 4 or the method as set forth in Claim 8 and wherein the at least one downlink data control channel is one of:
mapped to different time/frequency resource; and
mapped to same time/frequency resource.

## Patentansprüche

1. Benutzergerät (116), umfassend:
eine Vielzahl von Antennen, die konfiguriert sind, um mit mindestens einer Basisstation (102, 103) zu kommunizieren; und
eine Verarbeitungsschaltung, die mit der Vielzahl von Antennen gekoppelt ist,
wobei die Verarbeitungsschaltung konfiguriert ist, um mindestens einen Downlink-Datensteuerkanal von der mindestens einen Basisstation (102, 103) zu empfangen, wobei der mindestens eine Downlink-Datensteuerkanal durch eine Vielzahl von Sendestrahlen (Tx-Strahlen) gesendet wird und konfiguriert ist, um Ressourcenzuweisungsinformationen zu beinhalten, die für das Benutzergerät (116) bestimmt sind, wobei jeder von der Vielzahl von Tx-Strahlen konfiguriert ist, um ein zellspezifisches Referenzsignal (cell specific reference signal, CRS) und eine Strahlkennung zu tragen, wobei die Verarbeitungsschaltung ferner konfiguriert ist, um die Vielzahl von Tx-Strahlen und eine Vielzahl von Rx-Strahlen entsprechend den Tx-Strahlen zu messen;
wobei die Verarbeitungsschaltungsanordnung ferner konfiguriert ist, um über das CRS einen Messbericht an die mindestens eine Basisstation (102, 103) zu senden, wobei der Messbericht über das CRS das Messresultat über die Vielzahl von Tx-Strahlen beinhaltet; und
wobei die Verarbeitungsschaltung ferner konfiguriert ist, um von der mindestens einen Basisstation (102, 103) eine Nachricht über eine Entscheidung in Bezug auf die Vielzahl von Tx-Strahlen zu empfangen, die für die Sendung des Datensteuerkanals verwendet werden sollen, wobei der Datensteuerkanal über die entschiedenen Tx-Strahlen gesendet wird, und wobei die Verarbeitungsschaltung konfiguriert ist, um den Datensteuerkanal unter Verwendung der Rx-Strahlen entsprechend den dedizierten Tx-Strahlen zu empfangen, wobei die Entscheidung auf einer Fähigkeit des Benutzergeräts bezüglich darauf basiert, ob das Benutzergerät (116) eine Vielzahl von Rx-Strahlen gleichzeitig empfangen kann.

2. Benutzergerät (116) wie dargelegt in Anspruch 1, wobei das Benutzergerät (116) konfiguriert ist, um den mindestens einen Downlink-Datensteuerkanal basierend auf einer koordinierten Mehrpunktsendung zu empfangen.

3. Benutzergerät (116) wie dargelegt in Anspruch 1, wobei der mindestens eine Downlink-Datensteuerkanal eines von Folgenden ist:
gemappt auf eine unterschiedliche Zeit-/Frequenz-Ressource; und
gemappt auf eine gleiche Zeit-/Frequenz-Ressource; und
wobei die Verarbeitungsschaltung konfiguriert ist, um mindestens ein Signal zu verarbeiten, das sich auf den mindestens einen Downlink-Datensteuerkanal bezieht.

4. Basisstation (102, 103), umfassend:
eine Vielzahl von Antennen, die konfiguriert sind, um mit einem Benutzergerät (116) zu kommunizieren; und
eine Verarbeitungsschaltung, die mit der Vielzahl von Antennen gekoppelt ist,
wobei die Verarbeitungsschaltung konfiguriert ist, um mindestens einen Downlink-Datensteuerkanal an das Benutzergerät (116) zu senden, wobei der mindestens eine Downlink-Datensteuerkanal durch eine Vielzahl von Sendestrahlen (Tx-Strahlen) gesendet wird und konfiguriert ist, um Ressourcenzuweisungsinformationen zu beinhalten, die für das Benutzergerät (116) bestimmt sind, wobei jeder von der Vielzahl von Tx-Strahlen konfiguriert ist, um ein zellspezifisches Referenzsignal (cell specific reference signal, CRS) und eine Strahlkennung zu tragen,
wobei die Verarbeitungsschaltung ferner konfiguriert ist, um über das CRS einen Messbericht von dem Benutzergerät (116) zu empfangen, wobei der Messbericht über das CRS ein Messresultat über die Vielzahl von Tx-Strahlen beinhaltet; und
wobei die Verarbeitungsschaltung ferner konfiguriert ist, um eine Nachricht über eine Entscheidung in Bezug auf die Vielzahl von Tx-Strahlen zu senden, die für die Sendung des Datensteuerkanals verwendet werden sollen, wobei der Datensteuerkanal über die dedizierten Tx-Strahlen gesendet wird, wobei die Entscheidung auf einer Fähigkeit des Benutzergeräts bezüglich darauf basiert, ob das Benutzergerät (116) eine Vielzahl von Rx-Strahlen gleichzeitig empfangen kann.

5. Basisstation (102, 103) wie dargelegt in Anspruch 4, wobei die Verarbeitungsschaltung konfiguriert ist, um den mindestens einen Downlink-Datensteuerkanal basierend auf einer koordinierten Mehrpunktübertragung zu senden.

6. Basisstation (102, 103) wie dargelegt in Anspruch 4, wobei die Verarbeitungsschaltung zu Folgendem konfiguriert ist:
Erzeugen von Informationen bezüglich einer Entscheidung darüber, ob das Benutzergerät (116) die für das Benutzergerät (116) bestimmten Informationen getrennt oder gemeinsam dekodiert, und
Senden der Informationen bezüglich der Entscheidung an das Benutzergerät (116),
wobei die Informationen bezüglich der Entscheidung basierend auf einer Mobilität des Benutzergeräts (116) und/oder auf Informationen bezüglich einer Messung an einem zellspezifisches Referenzsignal (cell specific reference signal, CRS) erzeugt werden, wobei die Informationen bezüglich der Messung von dem Benutzergerät (116) empfangen werden.

7. Basisstation (102, 103), wie dargelegt in Anspruch 4, wobei die Verarbeitungsschaltung konfiguriert ist, um von dem Benutzergerät (116) Informationen zu empfangen, die sich auf eine von dem Benutzergerät (116) durchgeführte Messung an einem CRS beziehen.

8. Verfahren, umfassend:
Kommunizieren mit einem Benutzergerät (116) über eine Vielzahl von Sendestrahlen (Tx-Strahlen);
Senden, durch mindestens eine Basisstation (102, 103), von mindestens einem Downlink-Datensteuerkanal an das Benutzergerät (116), wobei der mindestens eine Downlink-Datensteuerkanal durch eine Vielzahl von Sendestrahlen Tx-Strahlen gesendet wird und konfiguriert ist, um Ressourcenzuweisungsinformationen zu beinhalten, die für das Benutzergerät (116) bestimmt sind, wobei jeder von der Vielzahl von Tx-Strahlen und der jeder von der Vielzahl von Tx-Strahlen konfiguriert ist, um ein zellspezifisches Referenzsignal (cell specific reference signal, CRS) und eine Strahlkennung zu tragen,
Empfangen eines Messberichts über das CRS von der Benutzerausrüstung (116), wobei der Messbericht über das CRS ein Messresultat über die Vielzahl von Tx-Strahlen enthält; und
ferner Senden, durch die mindestens eine Basisstation (102, 103), einer Nachricht über eine Entscheidung in Bezug auf die Vielzahl von Tx-Strahlen, die für die Sendung des Datensteuerkanals verwendet werden sollen, wobei der Datensteuerkanal über die dedizierten Tx-Strahlen gesendet wird, wobei die Entscheidung auf einer Fähigkeit des Benutzergeräts bezüglich darauf basiert, ob das Benutzergerät (116) eine Vielzahl von Rx-Strahlen gleichzeitig empfangen kann.

9. Verfahren nach Anspruch 8, wobei ein Senden ein Senden des mindestens einen Downlink-Datensteuerkanals basierend auf einer koordinierten Mehrpunktsendung umfasst.

10. Benutzerausrüstung (116) wie dargelegt in Anspruch 1, wobei ein Verarbeiten der Benutzerausrüstung (116) mindestens eines von Folgenden beinhaltet:
Decodieren des mindestens einen Downlink-Datensteuerkanals, der durch einen ersten Tx-Strahl der dedizierten TX-Strahlen unter Verwendung eines ersten zyklischen Redundanzcodes (cyclic redundancy code, CRC) gesendet wird, und Decodieren des mindestens einen Downlink-Datensteuerkanals, der durch einen zweiten Tx-Strahl der dedizierten TX-Strahlen unter Verwendung eines zweiten CRC gesendet wird;
Dekodieren des mindestens einen Downlink-Datenkontrollkanals, der durch die dedizierten TX-Strahlen unter Verwendung desselben CRC gesendet wird;
Dekodieren des mindestens einen Downlink-Datensteuerkanals, der gleichzeitig durch die dedizierten TX-Strahlen in eine Vielzahl von räumlichen Richtungen gesendet wird; und
Decodieren des mindestens einen Downlink-Datenkontrollkanals, der durch die dedizierten TX-Strahlen zu verschiedenen Zeiten in eine Vielzahl von Raumrichtungen gesendet wird.

11. Basisstation (102, 103) nach Anspruch 4 oder Verfahren nach Anspruch 8 und wobei der mindestens eine Downlink-Datensteuerkanal einer von Folgenden ist:
gemappt auf eine unterschiedliche Zeit-/Frequenz-Ressource; und
gemappt auf eine gleiche Zeit-/Frequenz-Ressource.

## Revendications

1. Équipement d'utilisateur (116) comprenant :
une pluralité d'antennes conçues pour communiquer avec au moins une station de base (102, 103) ; et
un ensemble de circuits de traitement couplé à la pluralité d'antennes,
ledit ensemble de circuits de traitement étant conçu pour recevoir au moins un canal de commande de données de liaison descendante en provenance de l'au moins une station de base (102, 103), ledit au moins un canal de commande de données de liaison descendante étant transmis par une pluralité de faisceaux de transmission (Tx) et étant conçu pour comprendre des informations d'allocation de ressources destinées à l'équipement d'utilisateur (116), chacun de la pluralité de faisceaux Tx étant conçu pour transporter un signal de référence spécifique de cellule (CRS) et un identifiant de faisceau,
ledit ensemble de circuits de traitement étant en outre conçu pour mesurer la pluralité de faisceaux Tx et une pluralité de faisceaux Rx correspondant aux faisceaux Tx ;
ledit ensemble de circuits de traitement étant en outre conçu pour transmettre un rapport de mesure sur le CRS à l'au moins une station de base (102, 103), ledit rapport de mesure sur le CRS comprenant le résultat de mesure sur la pluralité de faisceaux Tx ; et
ledit ensemble de circuits de traitement étant en outre conçu pour recevoir, en provenance de l'au moins une station de base (102, 103), un message concernant une décision quant à la pluralité de faisceaux Tx à utiliser pour la transmission du canal de commande de données, le canal de commande de données étant transmis sur les faisceaux Tx décidés, et ledit ensemble de circuits de traitement étant conçu pour recevoir le canal de commande de données à l'aide des faisceaux Rx correspondant aux faisceaux Tx décidés, ladite décision étant basée sur une capacité de l'équipement d'utilisateur quant à savoir si l'équipement d'utilisateur (116) peut recevoir une pluralité de faisceaux Rx simultanément.

2. Équipement d'utilisateur (116) selon la revendication 1, ledit équipement d'utilisateur (116) étant conçu pour recevoir l'au moins un canal de commande de données de liaison descendante sur la base d'une transmission multipoint coordonnée.

3. Équipement d'utilisateur (116) selon la revendication 1, ledit au moins un canal de commande de données de liaison descendante étant l'un parmi :
mis en correspondance avec différentes ressources de temps/fréquence ; et mis en correspondance avec la même ressource temps/fréquence, et ledit ensemble de circuits de traitement étant conçu pour traiter au moins un signal relatif à l'au moins un canal de commande de données de liaison descendante.

4. Station de base (102, 103) comprenant :
une pluralité d'antennes conçues pour communiquer avec un équipement d'utilisateur (116) ; et un ensemble de circuits de traitement couplé à la pluralité d'antennes, ledit ensemble de circuits de traitement étant conçu pour transmettre au moins un canal de commande de données de liaison descendante à l'équipement d'utilisateur (116), ledit au moins un canal de commande de données de liaison descendante étant transmis par une pluralité de faisceaux de transmission (Tx) et étant conçu pour comprendre des informations d'allocation de ressources destinées à l'équipement d'utilisateur (116), chacun de la pluralité de faisceaux Tx étant conçu pour transporter un signal de référence spécifique de cellule (CRS) et un identifiant de faisceau, ledit ensemble de circuits de traitement étant en outre conçu pour recevoir un rapport de mesure sur le CRS en provenance de l'équipement d'utilisateur (116), ledit rapport de mesure sur le CRS comprenant un résultat de mesure sur la pluralité de faisceaux Tx ; et
ledit ensemble de circuits de traitement étant en outre conçu pour transmettre un message concernant une décision quant à la pluralité de faisceaux Tx à utiliser pour la transmission du canal de commande de données, le canal de commande de données étant transmis sur les faisceaux Tx décidés, ladite décision étant basée sur une capacité de l'équipement d'utilisateur quant à savoir si l'équipement d'utilisateur (116) peut recevoir une pluralité de faisceaux Rx simultanément.

5. Station de base (102, 103) selon la revendication 4, ledit ensemble de circuits de traitement étant conçu pour transmettre l'au moins un canal de commande de données de liaison descendante sur la base d'une transmission multipoint coordonnée.

6. Station de base (102, 103) selon la revendication 4, ledit ensemble de circuits de traitement étant conçu pour :
générer des informations relatives à une décision quant à savoir si l'équipement d'utilisateur (116) décode les informations destinées à l'équipement d'utilisateur (116) séparément ou conjointement, et
transmettre les informations relatives à la décision à l'équipement d'utilisateur (116), lesdites informations relatives à la décision étant générées sur la base d'au moins l'une d'une mobilité de l'équipement d'utilisateur (116) et des informations relatives à une mesure sur un signal de référence spécifique de cellule (CRS), lesdites informations relatives à la mesure étant reçues en provenance de l'équipement d'utilisateur (116).

7. Station de base (102, 103) selon la revendication 4, ledit ensemble de circuits de traitement étant conçu pour recevoir, en provenance de l'équipement d'utilisateur (116), des informations relatives à une mesure sur un CRS effectuée par l'équipement d'utilisateur (116).

8. Procédé comprenant :
la communication avec un équipement d'utilisateur (116) par l'intermédiaire d'une pluralité de faisceaux de transmission (Tx) ;
la transmission, par au moins une station de base (102, 103), d'au moins un canal de commande de données de liaison descendante à l'équipement d'utilisateur (116), ledit au moins un canal de commande de données de liaison descendante étant transmis par une pluralité de faisceaux Tx et étant conçu pour comprendre des informations d'allocation de ressources destinées à l'équipement d'utilisateur (116), chacun de la pluralité de faisceaux Tx et chacun de la pluralité de faisceaux Tx étant conçu pour transporter un signal de référence spécifique de cellule (CRS) et un identifiant de faisceau ;
la réception d'un rapport de mesure sur le CRS de l'équipement d'utilisateur (116), ledit rapport de mesure sur le CRS comprenant un résultat de mesure sur la pluralité de faisceaux Tx ; et
la transmission en outre, par l'au moins une station de base (102, 103), d'un message concernant une décision quant à la pluralité de faisceaux Tx à utiliser pour la transmission du canal de commande de données, le canal de commande de données étant transmis sur les faisceaux Tx décidés, ladite décision étant basée sur une capacité de l'équipement d'utilisateur quant à savoir si l'équipement d'utilisateur (116) peut recevoir une pluralité de faisceaux Rx simultanément.

9. Procédé selon la revendication 8, ladite transmission comprenant la transmission de l'au moins un canal de commande de données de liaison descendante sur la base d'une transmission multipoint coordonnée.

10. Équipement d'utilisateur (116) selon la revendication 1, ledit traitement de l'équipement d'utilisateur (116) comprenant au moins un parmi :
le décodage de l'au moins un canal de commande de données de liaison descendante transmis par un premier faisceau Tx des faisceaux TX décidés à l'aide un premier code de redondance cyclique (CRC) et le décodage de l'au moins un canal de commande de données de liaison descendante transmis par un second faisceau Tx des faisceaux TX décidés à l'aide d'un second CRC ;
le décodage de l'au moins un canal de commande de données de liaison descendante transmis par les faisceaux TX décidés à l'aide d'un même CRC ;
le décodage de l'au moins un canal de commande de données de liaison descendante transmis simultanément à travers les faisceaux TX décidés dans une pluralité de directions spatiales ; et
le décodage de l'au moins un canal de commande de données de liaison descendante transmis par les faisceaux TX décidés à différents instants dans une pluralité de directions spatiales.

11. Station de base (102, 103) selon la revendication 4 ou procédé selon la revendication 8 et ledit au moins un canal de commande de données de liaison descendante étant l'un parmi :
mis en correspondance avec différentes ressources de temps/fréquence ; et
mis en correspondance à la même ressource de temps/fréquence.
